# EUROPEAN PATENT APPLICATION

(11) **EP 2 434 200 A1**
(43) Date of publication of application: **28.03.2012**
(21) Application number: 10793924.1
(22) Date of filing: 18.05.2010
(51) Int. Cl.: F21S 2/00, G02F 1/13357, F21Y 101/02

(54) **ILLUMINATION DEVICE, DISPLAY DEVICE AND TELEVISION RECEPTION DEVICE**

(30) Priority: 03.07.2009 JP 2009159057
(71) Applicant: Sharp Kabushiki Kaisha, Osaka-shi, Osaka 545-8522 (JP)
(72) Inventor: YOKOTA, Masashi, Osaka-shi, Osaka 545-8522 (JP)
(74) Representative: Müller-Boré & Partner Patentanwälte
(86) International application number: PCT/JP2010/058338
(87) International publication number: WO 2011/001753

(57) **Abstract**

A backlight unit 12 according to the present invention includes an LED board 18 including an LED 17 as a light source, a chassis 14 that stores the LED board 18 therein and has an opening 14b through which the light from the LED 17 exits, a chassis reflection sheet 22 that is arranged along an inner surface of the chassis 14 and reflects light and a board reflection sheet 23 that overlaps the LED board 18 on the side of the opening 14b in a plan view, is larger than the LED board 18 and reflects light, and the chassis 14 has a first supporting portion 27 supporting the LED board 18 and a second supporting portion 28 that is arranged closer to the opening 14b than the first supporting portion 27 and supports the board reflection sheet 23.

## Description

### TECHNICAL FIELD

The present invention relates to a lighting device, a display device and a television receiver.

### BACKGROUND ART

For example, a liquid crystal panel used for a liquid crystal display device such as a liquid crystal television set does not emit light by itself, and therefore, requires a separate backlight unit as a lighting device. This backlight unit is installed on the back side of the liquid crystal panel (the side opposite to a display surface), and includes a chassis including an opened surface on the liquid crystal panel side, a light source stored in the chassis, a reflection sheet that is arranged in the chassis and reflects light toward an opening of the chassis, and an optical member (diffuser sheet or the like) that is arranged at the opening of the chassis and efficiently discharges light toward the liquid crystal panel.

Among the above-mentioned components of the backlight unit adopts, as the light source, an LED for example, and in such case, an LED board that mounts the LED thereon is stored in the chassis. Further, since light emitted from the LED tends to have a high directivity, in order to mitigate the directivity, a diffuser lens corresponding to each LED may be attached to the LED board. An example of the backlight unit using the LED and the diffuser lenses is described in Patent Document 1.

### Prior Art Document

### Patent Document

Patent Document 1: Japanese Unexamined Patent Publication No. 2008-304839

### Problem to be Solved by the Invention

When an LED board covering the entire chassis is used for the backlight unit, material costs increase and therefore, for example, it is preferable to intermittently arrange a plurality of strip-like LED boards. In consideration of workability in assembling during manufacture of the backlight unit, it is preferable to adopt a procedure of storing the LED board including the diffuser lenses in an integral manner in the chassis and then, attaching a reflection sheet. In order to employ such procedure, it is need to provide a lens insertion hole through which the diffuser lens is passed in the reflection sheet.

However, when the lens insertion hole is formed in the reflection sheet, an area that reflects light may not be ensured between the diffuser lens and the LED board, disadvantageously resulting in that light reflected by the diffuser lens toward the LED board cannot be effectively used. Thus, the present inventor adopts a configuration in which, in addition to the reflection sheet above, a board reflection sheet is installed between the diffuser lens and the LED board. With this configuration, the light reflected by the diffuser lens toward the LED board can be reflected by the board reflection sheet toward the diffuser lens again and be used effectively.

Here, in consideration of the light use efficiency, it is preferred that the board reflection sheet is larger than the diffuser lens in a plan view. On the other hand, in consideration of the material costs, it is preferred that the LED board has minimum required dimension for mounting the diffuser lens and the like thereon. From such circumstances, the board reflection sheet may be larger than the LED board in a plan view.

However, the above-mentioned design can cause following problems. Specifically, in the board reflection sheet, a part overlapping with the LED board is supported by the LED board, while a part not overlapping with the LED board is not supported by the LED board and the chassis. For this reason, stress tends to be concentrated on a boundary between the supported part and the unsupported part in the board reflection sheet, thereby possibly causing local deformation of the board reflection sheet. Disadvantageously, such deformation of the board reflection sheet can cause unevenness of reflected light.

### DISCLOSURE OF THE PRESENT INVENTION

The present invention is made in view of the mentioned circumstances above and an object of the invention is to suppress deformation in the board reflection member.

### Means for Solving the Problem

A lighting device according to the present invention includes a light source, a light source board having the light source thereon, a chassis configured to store the light source board therein and have an opening through which the light from the light source exits, a chassis reflection member arranged along an inner surface of the chassis and configured to reflect light, a board reflection member provided to overlap with the light source board on a side of the opening in a plan view. The board reflection member is configured to be greater in size than the light source board and reflect light. In the lighting device, the chassis has a first supporting portion configured to support the light source board and a second supporting portion arranged relatively closer to the opening than the first supporting portion and support the board reflection member.

With this configuration, the board reflection member that overlaps with the light source board on the opening side is provided in addition to the chassis reflection member arranged along the inner surface of the chassis. Therefore, for example, even when a hole is formed in the chassis reflection member, a part of the board reflection member can be arranged in the hole and therefore, the light use efficiency can be improved. The board reflection member is larger than the light source board in a plan view. This means that the light source board is smaller than the board reflection member in a plan view, which can reduce material costs for the light source board.

In the board reflection member, the area overlapping with the light source board on the opening side is supported by the light source board, while the area that does not overlap with the light source board is supported by the second supporting portion arranged closer to the opening than the first supporting portion supporting the light source board. Accordingly, it is prevented that stress concentrates on the boundary between the overlapping portion and the non-overlapping portion with the light source board in the board reflection member. As a result, deformation in the board reflection member is hard to occur.

Following configuration is preferable as an embodiment of the present invention.
(1) A hole may be formed in the chassis reflection member, and at least a part of the board reflection member may be arranged in the hole in a plan view. With this configuration, since the board reflection member arranged in the hole of the chassis reflection member can reflect light toward the hole, the light use efficiency can be improved.

(2) An edge of the hole of the chassis reflection member may overlap with the board reflection member in a plan view. With this configuration, the edge of the hole of the chassis reflection member and the board reflection member are connected to each other without any break in a plan view. As a result, the light use efficiency can be further improved. Moreover, since the board reflection member is supported by the second supporting portion to suppress deformation, it is prevented that a gap is generated between the edge of the hole and the board reflection member and light leaks from the gap and therefore, a high light use efficiency is obtained.

(3) At least a part of the second supporting portion may be arranged so as to overlap with the edge of the hole of the chassis reflection member in a plan view. With this configuration, the overlapping part between the edge of the hole of the chassis reflection member and the board reflection member can be supported by the second supporting portion. It can therefore be prevented that a gap is generated between the edge of the hole of the chassis reflection member and the board reflection member and light leaks from the gap more reliably. As a result, the light use efficiency can be further improved.

(4) The chassis reflection member may be formed such that the hole is greater in size than the light source board in a plan view, while at least a part of the second supporting portion is provided in the hole in a plan view. With this configuration, although the part of the board reflection member, which is arranged within the hole in a plan view, includes a part that does not overlap with the light source board and thus, is not supported by the light source board, the part can be supported by the second supporting portion, thereby suppressing deformation. Since the part of the board reflection member, which is arranged within the hole in a plan view, has a function of reflecting light toward the hole, by suppressing deformation of the part, unevenness of reflected light is hard to occur and excellent optical characteristics are obtained.

(5) The board reflection member may be provided with a light source insertion hole so as to overlap with the light source in a plan view, and the light source fits in the light source insertion hole and the hole of the chassis reflection member is greater in size than the light source insertion hole in a plan view. With this configuration, since the light source passes through the light source insertion hole and the hole, it is prevented that light from the light source is blocked by the board reflection member or the chassis reflection member. By arranging the board reflection member in the hole that is larger than the light source insertion hole in a plan view, the light use efficiency can be improved.

(6) The lighting device may further includes a diffuser lens provided on a side of the opening with respect to the light source board to overlap with the light source in a plan view and configured to diffuse light from the light source The chassis reflection member may include the hole so as to overlap with the diffuser lens in a plan view. The hole is formed such that the diffuser lens passes therethroguh. With this configuration, the light emitted from the light source can be diffused by the diffuser lens and guided to the opening. Even when a light reflected toward the light source board occurs at the diffuser lens, the light can be reflected toward the diffuser lens again by the board reflection member arranged within the hole, the light use efficiency can be improved. As a result, occurrence of unevenness can be suppressed while increasing the brightness of light emitted from the opening.

(7) The board reflection member may be greater in size than the diffuser lens in a plan view. With this configuration, the light reflected toward the light source board by the diffuser lens can be returned to the diffuser lens by the board reflection member more reliably and therefore, the light use efficiency can be further improved.

(8) At least a part of an outer edge of the light source board may overlap with the diffuser lens in a plan view. By forming the light source board in this manner, material costs for the light source board can be reduced, which is preferable to cost reduction.

(9) The second supporting portion may be provided on a same plane as a surface of the light source board facing the board reflection member. With this configuration, since a step is not generated between a counter surface of the light source board and the second supporting portion, both of which support the board reflection member, deformation of the board reflection member can be effectively suppressed.

(10) The board reflection member may be projected outward from both opposing outer edges of the light source board, and at least a pair of second supporting portions be arranged so as to sandwich the light source board therebetween in a plan view. With this configuration, since the portions of the board reflection member, which are projecting from the both outer edges of the light source board, can respectively be supported by the second supporting portion, deformation of the board reflection member can be effectively suppressed.

(11) The second supporting portion may be formed by partially protruding the chassis toward the opening. With this configuration, as compared to the case the first supporting portion is formed by partially protruding the chassis toward the side opposite to the opening, the second supporting portion can be maintained thin as a whole.

(12) The second supporting portion may be formed in a point-like shape in a plan view. With this configuration, since the area of the second supporting portion in the entire chassis can be reduced as much as possible, the second supporting portion can be formed easily by partially protruding the chassis. Further, the degree of freedom in arranging the second supporting portion is improved.

(13) The board reflection member is projected outward from the outer edge of the light source board, and the second supporting portion and the light source are arranged in a projecting direction of the board reflection member. With this configuration, since the light source and the second supporting portion are arranged in a projecting direction of the board reflection member from the outer edge of the light source board, deformation of the board reflection member can be suppressed at a location closer to the light source. As a result, when light from the light source is reflected by the board reflection member, unevenness is harder to occur.

(14) The light source includes a plurality of light sources and the light sources may be arranged in one direction on the light source board, and the second supporting portion includes a plurality of second supporting portions and the second supporting portions may be arranged in the one direction that the light sources are arranged. With this configuration, since deformation of the board reflection member is suppressed in the state where each of the second supporting portions is located closer to each of the light sources arranged on the light source board in parallel, unevenness of the light reflected by the board reflection member is less likely to occur
.

(15) The second supporting portion may extend along the outer edge of the light source board. With this configuration, since it is prevented that stress concentrates on the board reflection member over a predetermined length along the outer edge of the light source board, deformation in the board reflection member can be effectively suppressed.

(16) The light source board may be rectangular in a plan view, and the second supporting portion extends in a long-side direction of the light source board. With this configuration, since it is possible to mitigate stress concentration on the board reflection member over the predetermined length along the outer edge of the light source board, deformation in the board reflection member can be suppressed more effectively.

(17) The first supporting portion may be formed by partially protruding the chassis toward a side opposite to the opening. With this configuration, the distance between the light source board and the opening can be increased by protruding the first supporting portion toward the side opposite to the opening. Accordingly, a long light path length where light emitted from the light source reaches the opening can be ensured and therefore, unevenness of light emitted from the opening is hard to occur.

(18) In the lighting device, the light source board includes a plurality of light source boards and the light source boards may be arranged in parallel at predetermined intervals and the second supporting portion may be configured to cover an entire area between the light source boards that are arranged in adjacent to each other. With this configuration, the second supporting portion covering the entire area between the adjacent light source boards can reliably support the board reflection member overlapping each light source board. Accordingly, deformation of the board reflection member is harder to occur.

(19) The chassis may have a board positioning portion configured to position the light source board along a plate surface of the light source board. With this configuration, in arranging the light source board in the chassis, the light source board can be positioned along its plate surface by the board positioning portion. Accordingly, the first supporting portion can reliably support the light source board, and the board reflection member and the second supporting portion, which are placed on the light source board, can be correctly positioned.

(20) The board positioning portion may extend along the outer edge of the light source board. With this configuration, by fitting the board positioning portion along the edge of the light source board, the light source board can be positioned easily and properly.

(21) The light source board may be rectangular in a plan view, and the board positioning portion extends in a long-side direction of the light source board. With this configuration, rectangular light source board can be positioned more easily and properly.

(22) The board positioning portion may be configured to position the light source board in two directions that are along a plate surface of the light source board and are orthogonal to each other. With this configuration, the light source board can be correctly positioned in a two-dimensional way.

(23) The board positioning portion may be included in one of the first supporting portion and the second supporting portion. With this configuration, as compared to the case where the first supporting portion or the second supporting portion is provided separately from the board positioning portion, the configuration of the chassis can be simplified and manufacturing costs can be reduced.

(24) The board positioning portion may be configured by partially protruding the chassis toward the opening and included in the second supporting portion. With this configuration, as compared to the case where the board positioning portion and the first supporting portion are formed by partially protruding the chassis toward the side opposite to the opening, the board positioning portion can be maintained thin as a whole.

(25) The board positioning portion may be configured by partially protruding the chassis toward a side opposite to the opening so as to form a board storing space configured to store the light source board therein and the board positioning portion may be included in the first supporting portion. With this configuration, the distance between the light source board stored in the board storing space and the opening can be increased by protruding the chassis toward the side opposite to the opening. Accordingly, a long light path length where light emitted from the light source reaches the opening can be ensured and therefore, unevenness of light emitted from the opening is hard to occur.

(26) The light source may include a plurality of light sources and the light sources are arranged on the light source board. The board reflection member may be formed in an elongated shape and include a plurality of light source-surrounding-reflection portions and a reflection portion-connecting portion. Each light source-surrounding-reflection portion is configured to surround each of the light sources in a plan view and the reflection portion-connecting portion is configured to connect the light source-surrounding-reflection portions that are adjacent to each other. The reflection portion-connecting portion may have a width relatively smaller than the light source-surrounding-reflection portion in a short-side direction of the board reflection member. With this configuration, since in the long board reflection member, the plurality of light source-surrounding-reflection portions is connected to each other by use of the reflection portion-connecting portion. Compared to the case where each light source-surrounding-reflection portion is connected and the board reflection member is configured of individually divided light source-surrounding-reflection portions, it is easier to handle and, for example, costs can be reduced. While the light source-surrounding-reflection portions need to have some dimension (width) for reflecting light from the light source, the reflection portion-connecting portion does not need to have the same dimension (width) as the light source-surrounding-reflection portion as long as it has the mechanical strength necessary for connecting the light source-surrounding-reflection portions to each other. According to the present invention, since the width of the reflection portion-connecting portion is smaller than the width of the light source-surrounding-reflection portion in the short-side direction of the board reflection member. Compared to the case where the board reflection member has the same width as that of the light source-surrounding-reflection portion over the entire length, the total area of the board reflection member can be reduced and therefore, reduction of material costs, that is, cost reduction can be achieved.

(27) The second supporting portion may be provided so as to overlap with the light source-surrounding-reflection portion in a plan view. With this configuration, the light source-surrounding-reflection portions are supported by the second supporting portion, deformation of the light source-surrounding-reflection portions can be prevented. As a result, when light from the light source is reflected by the light source-surrounding-reflection portions, unevenness is less likely to occur.

(28) The light source may include a plurality of light sources and the light sources may be arranged on the light source board. The light source board may be formed in an elongated shape and include a plurality of light source arrangement portions in which each of the light sources is arranged and an arrangement portion-connecting portion that connects the light source arrangement portions adjacent to each other. The arrangement portion-connecting portion may have a width relatively smaller than the light source arrangement portion in the short-side direction of the light source board. With this configuration, since in the light source board constituting the long-side, the plurality of light source arrangement portions is connected to each other by means of the arrangement portion-connecting portion. Compared to the case where each light source arrangement portion is not connected and the light source board is configured of the individually divided light source arrangement portions, it is easier to handle and, for example, costs can be reduced. While the light source arrangement portions need to have some dimension (width) in arranging the light sources, the arrangement portion-connecting portion does not need to have the same dimension (width) as the light source arrangement portion as long as it has mechanical strength necessary for connecting the light source arrangement portions to each other. Thus, according to the present invention, since the width of the arrangement portion-connecting portion is smaller than the width of the light source arrangement portion in the short-side direction of the light source board, as compared to the case where the light source board has the same width as that of the light source arrangement portion over the entire length, the total area of the light source board can be reduced and therefore, reduction of material costs, that is, cost reduction can be achieved.

(29) The lighting device may further include a holding member configured to hold the light source board, the board reflection member and the chassis reflection member between the holding member and the chassis. With this configuration, the holding member can hold the light source board, the board reflection member and the chassis reflection member together.

(30) The holding member may include a body portion and a fixed portion. The body portion and the chassis sandwich the light source board, the board reflection member and the chassis reflection member therebetween and the fixed portion may be configured to protrude from the body portion toward the chassis and to be fixed to the chassis. The fixed portion may be fixed to the chassis through the light source board, the board reflection member and the chassis reflection member. With this configuration, the fixed portion passing through the light source board, the board reflection member and the chassis reflection member can position the light source board, the board reflection member and the chassis reflection member in a direction along the plate surface.

(31) The fixed portion may pass through the light source board, the board reflection member, the chassis reflection member and the chassis, and be fitted to the chassis from a side opposite to the light source board. With this configuration, since the holding member can be fixed by engaging the fixed portion passing through the light source board, the board reflection member, the chassis reflection member as well as the chassis with the chassis, fixation can be easily achieved at low costs without requiring another fixing means such as adhesive.

(32) The light source is an LED. With this configuration, higher brightness and lower power consumption can be achieved.

Next, in order to solve the above-mentioned problem, a display device according to the present invention includes the above-mentioned lighting device and a display panel configured to provide display using light from the lighting device.

According to such display device, in the lighting device that supplies light to the display panel, the board reflection member reflecting light in the chassis is hard to be deformed. As a result, unevenness of light reflected by the board reflection member is hard to occur and therefore, high-quality display can be achieved.

One example of the display panel is a liquid crystal panel. Such display device as the liquid crystal display device can be used in various applications including displays for television sets and personal computers, and is suitable especially as a large screen.

### Advantageous Effect of the Invention

According to the present invention, deformation in the board reflection member can be suppressed.

### BRIEF DESCRIPTION OF THE DRAWINGS

Fig. 1 is an exploded perspective view showing a schematic configuration of a television receiver according to a first embodiment of the present invention;
Fig. 2 is an exploded perspective view showing a schematic configuration of a liquid crystal display device provided in the television receiver;
Fig. 3 is a plan view showing an arrangement of LED boards and holding members in a chassis of the liquid crystal display device;
Fig. 4 is a sectional view taken along line iv-iv in Fig. 3 of the liquid crystal display device;
Fig. 5 is a sectional view taken along line v-v in Fig. 3 of the liquid crystal display device;
Fig. 6 is a plan view showing a detailed arrangement of the LED boards and the holding members;
Fig. 7 is a sectional view taken along line vii-vii in Fig. 6;
Fig. 8 is a sectional view taken along line viii-viii in Fig. 6;
Fig. 9 is a sectional view taken along line ix-ix in Fig. 6;
Fig. 10 is a plan view of the LED board;
Fig. 11 is a plan view showing the state where a board reflection sheet and diffuser lenses are attached to the LED board (light source unit);
Fig. 12 is a plan view of a monofunctional holding member;
Fig. 13 is a bottom view of the monofunctional holding member;
Fig. 14 is a plan view of a multifunctional holding member;
Fig. 15 is a bottom view of the multifunctional holding member;
Fig. 16 is a plan view showing the state where the light source unit is attached to the chassis;
Fig. 17 is a bottom view showing the state where the light source unit is attached to the chassis;
Fig. 18 is a sectional view taken along line viii-viii in Fig. 16;
Fig. 19 is a sectional view showing a relationship between a board reflection sheet and second supporting portions according to a first modification example of the first embodiment;
Fig. 20 is a sectional view showing a relationship between the board reflection sheet and the second supporting portions according to a second modification example of the first embodiment;
Fig. 21 is a sectional view showing a relationship between the board reflection sheet and the second supporting portions according to a third modification example of the first embodiment;
Fig. 22 is a sectional view showing a relationship between the board reflection sheet and the second supporting portions according to a fourth modification example of the first embodiment;
Fig. 23 is an enlarged bottom view showing a chassis according to a second embodiment of the present invention;
Fig. 24 is a sectional view taken along line xxiv-xxiv in Fig. 23;
Fig. 25 is a sectional view showing first supporting portions, board positioning portions and second supporting portions according to a third embodiment of the present invention;
Fig. 26 is a sectional view showing the first supporting portions, the board positioning portions and the second supporting portions;
Fig. 27 is an enlarged bottom view of a chassis;
Fig. 28 is a sectional view showing the board positioning portions according to a first modification example of the third embodiment;
Fig. 29 is a plan view showing the state where the board reflection sheet is placed on the LED board according to a fourth embodiment of the present invention;
Fig. 30 is a plan view showing the state where the LED board on which the board reflection sheet is placed and the diffuser lens is implemented is arranged in the chassis;
Fig. 31 is a plan view illustrating assignment of board reflection sheets to a base material at manufacturing of the board reflection sheets;
Fig. 32 is a plan view showing the state where the LED board on which the board reflection sheet is placed and the diffuser lens is implemented is arranged in the chassis according to a first modification example of the fourth embodiment; and
Fig. 33 is a sectional view showing a relationship between the second supporting portions and the LED board according to a fifth embodiment.

### BEST MODE FOR CARRYING OUT THE INVENTION

### <First embodiment>

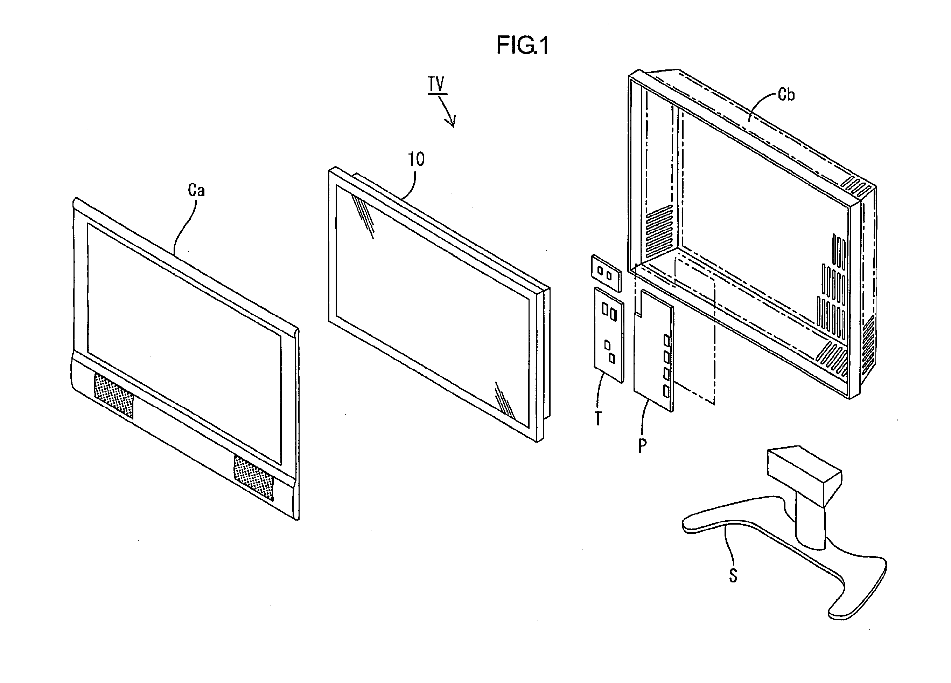

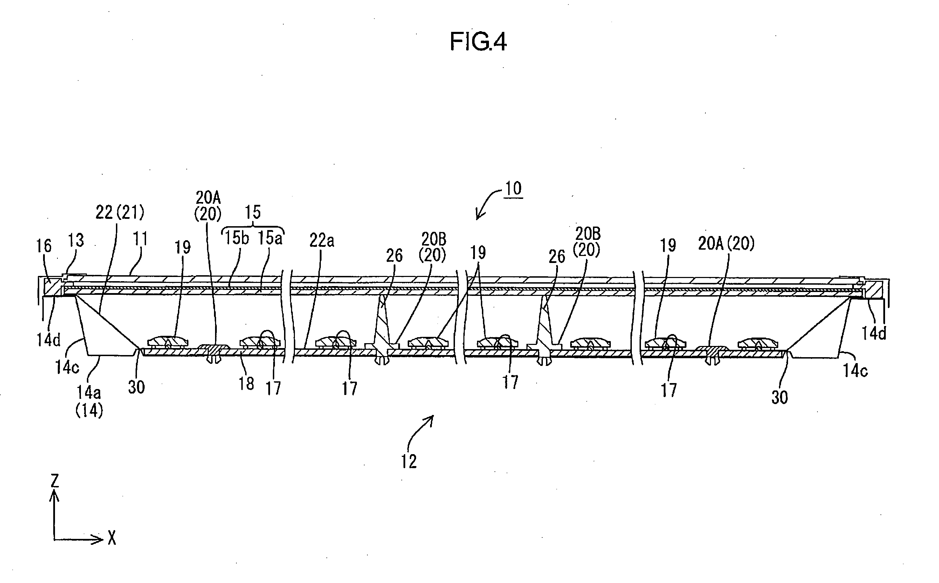

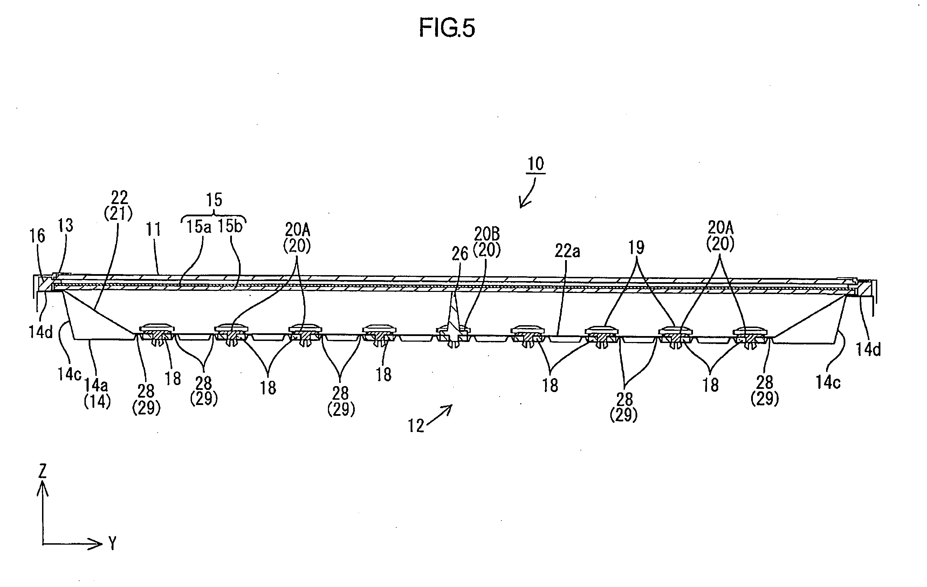

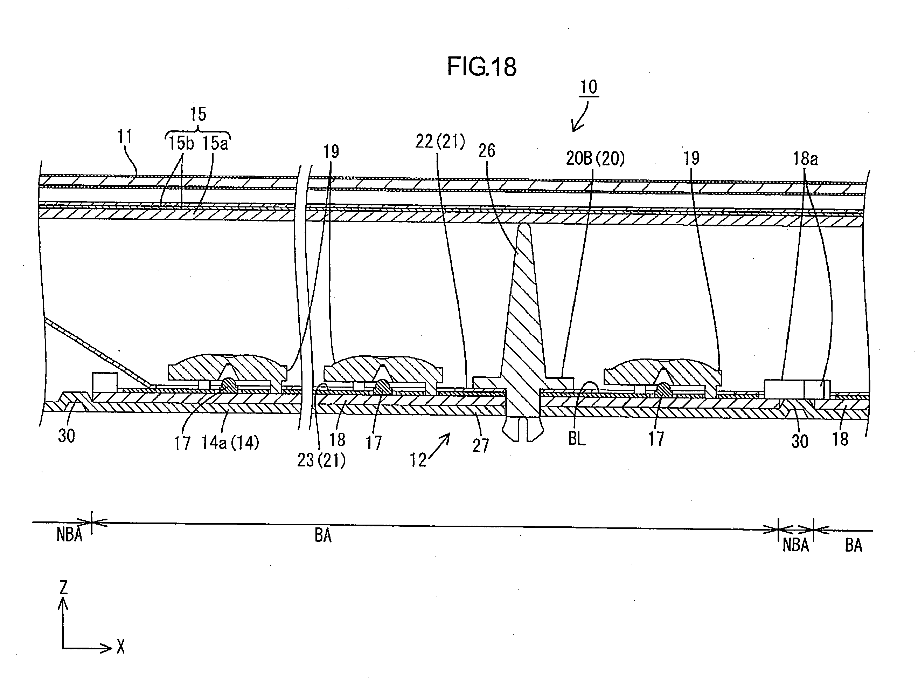

A first embodiment of the present invention will be described with reference to Figs. 1 to 18. In this embodiment, a liquid crystal display device 10 is used as an example. A part of each figure shows an X-axis, a Y-axis and a Z-axis, and a direction of each axis is represented in each figure. It is given that an upper side in Figs. 4 and 5 is a front side and a lower side in these figures is a back side.

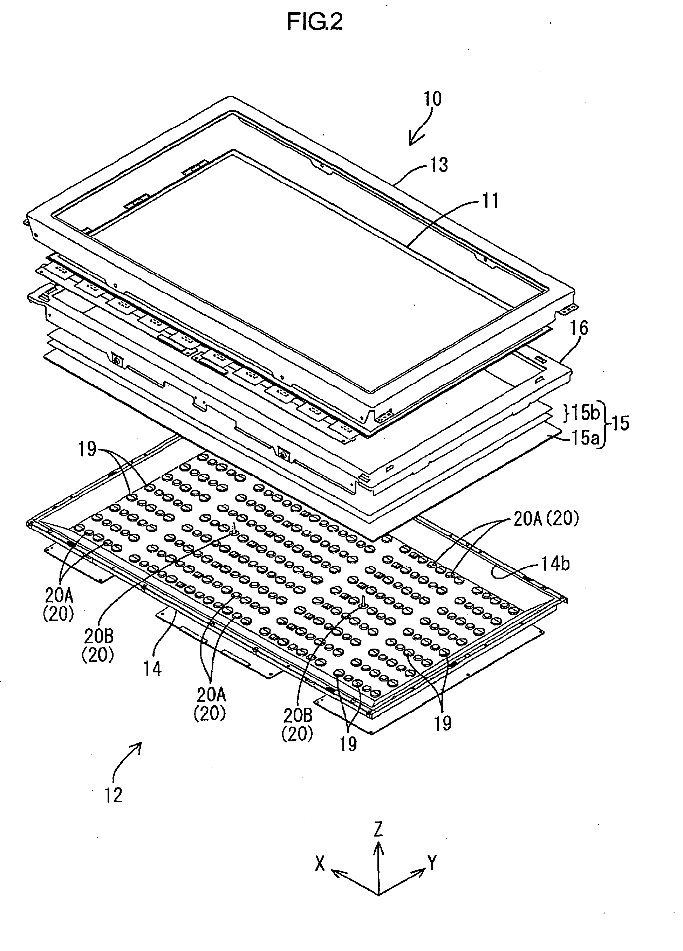

A television receiver TV according to this embodiment includes, as shown in Fig. 1, the liquid crystal display device 10, front and back cabinets Ca and Cb that store the liquid crystal display device 10 therebetween, a power source P, a tuner T and a stand S. The liquid crystal display device (display device) 10 is shaped like an oblong quadrangle as a whole (rectangular) and is stored in a longitudinally mounted state. The liquid crystal display device 10 includes, as shown in Fig. 2, a liquid crystal panel 11 as a display panel and a backlight unit (lighting device) 12 as an external light source, and these components are integrally held by a frame-like bezel 13 or the like. In this embodiment, it is assumed that a screen size is 42 inches and an aspect ratio is 16:9.

Next, the liquid crystal panel 11 and the backlight unit 12 that constitute the liquid crystal display device 10 will be successively described. The liquid crystal panel (display panel) 11 among them is rectangular in a plan view, and is formed by sticking a pair of glass substrates to each other with a predetermined gap therebetween and filling a liquid crystal between the both glass substrates. One glass substrate has a switching component (for example, a TFT) connected to a source wiring and a gate wiring that are orthogonal to each other, a pixel electrode connected to the switching component and an alignment film, and the other glass substrate has a color filter in which color sections of R (red), G (green), B (blue) are arranged in a predetermined pattern, a counter electrode and an alignment film and the like. Polarizing plates are provided outer of the both boards.

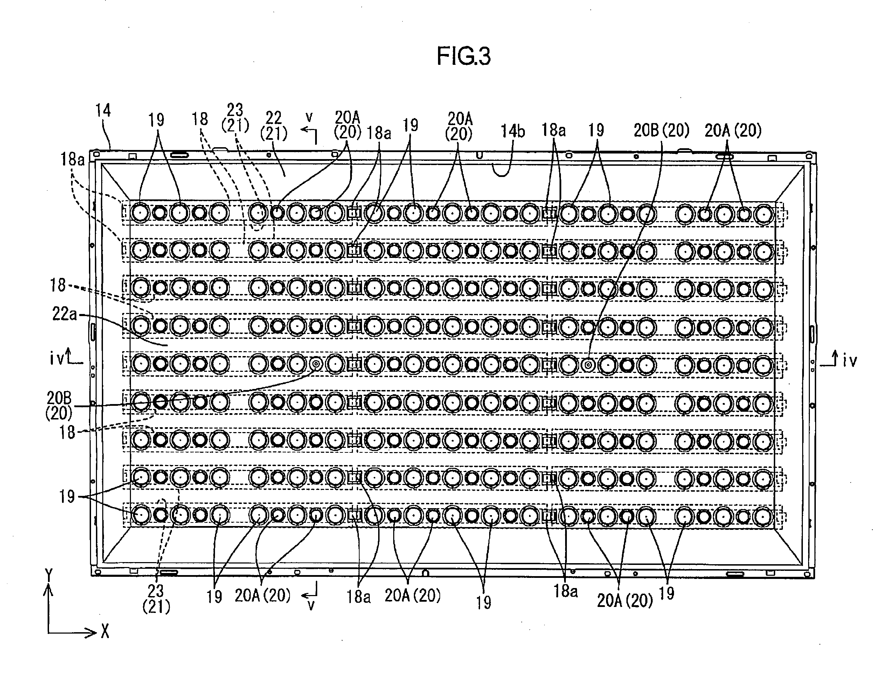

Subsequently, the backlight unit 12 will be described in detail. The backlight unit 12 includes, as shown in Fig. 2, a substantially box-like chassis 14 having openings 14b on the side of a light emitting surface (the liquid crystal panel 11 side), an optical member group 15 (a diffuser (light diffusing member) 15a, and a plurality of optical sheets 15b arranged between the diffuser 15a and the liquid crystal panel 11) arranged so as to cover the openings 14b of the chassis 14, and a frame 16 that is arranged along an outer edge of the chassis 14 and holds an outer edge of the optical member group 15 between the frame 16 and the chassis 14. As shown in Figs. 3 to 5, the chassis 14 includes therein LEDs 17 (Light Emitting Diode) as light sources, LED boards 18 that mount the LEDs 17 thereon and diffuser lenses 19 attached at positions corresponding to the LEDs 17 on the LED boards 18. In the chassis 14, holding members 20 capable of holding the LED boards 18 between the holding members 20 and the chassis 14, and a reflection sheet 21 (reflection member) reflecting light in the chassis 14 toward the optical member 15 are provided. In the backlight unit 12, the side of the optical member 15, not the LEDs 17, is set as a light emitting side. Hereinafter, each component of the backlight unit 12 will be described in detail.

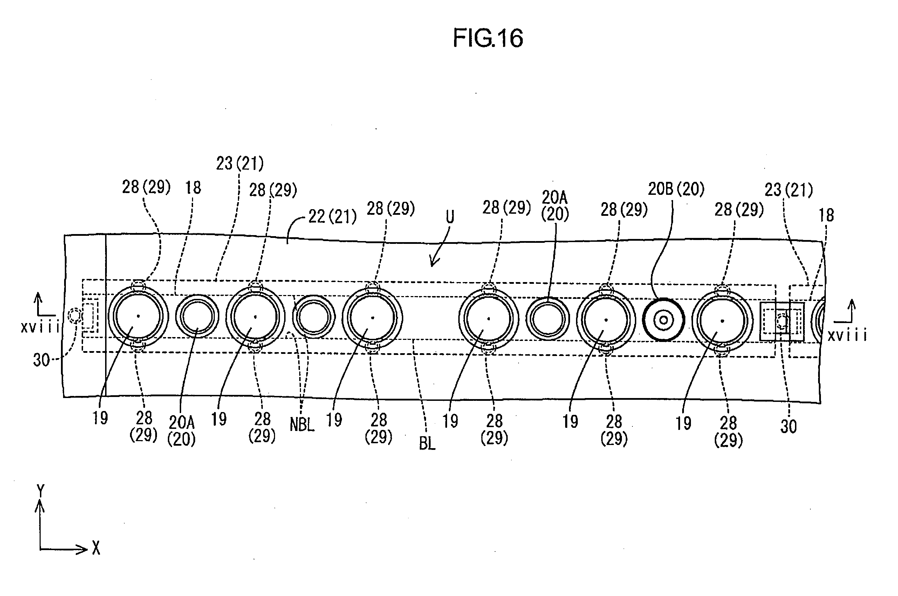

The chassis 14 is made of metal, and as shown in Figs. 3 to 5, consists of a rectangular bottom plate 14a like the liquid crystal panel 11, side plates 14c rising from outer ends of sides of the bottom plate 14a and receiving plates 14d extending outward from rising ends of the respective side plates 14c, and is shaped like a shallow box (shallow dish) opened toward the front side 8 as a whole. In the chassis 14, its long-side direction corresponds to the X axis direction (horizontal direction) and its short-side direction corresponds to the Y axis direction (vertical direction). The bottom plate 14a of the chassis 14 is substantially shaped like a flat plate in parallel to the liquid crystal panel 11 and the optical member 15, and has the same dimension as the liquid crystal panel 11 and the optical member 15 in a plan view. The bottom plate 14a includes on the plane surface thereof a plurality of LED boards 18 intermittently arranged at predetermined intervals in parallel, the detail of which will be described later. Accordingly, the bottom plate 14a has a board arrangement area BA where the LED boards 18 are arranged and board non-arrangement areas NBA where the LED boards 18 are not arranged (Figs. 3 and 16). The frame 16 and the optical member 15 described below can be mounted on each receiving plate 14d of the chassis 14 from the front side. The frame 16 is screwed into each receiving plate 14d. The bottom plate 14a includes opened attachment holes 14e configured to attach the holding members 20. The plurality of attachment holes 14e is arranged in the bottom plate 14a corresponding to attachment positions of the holding members 20.

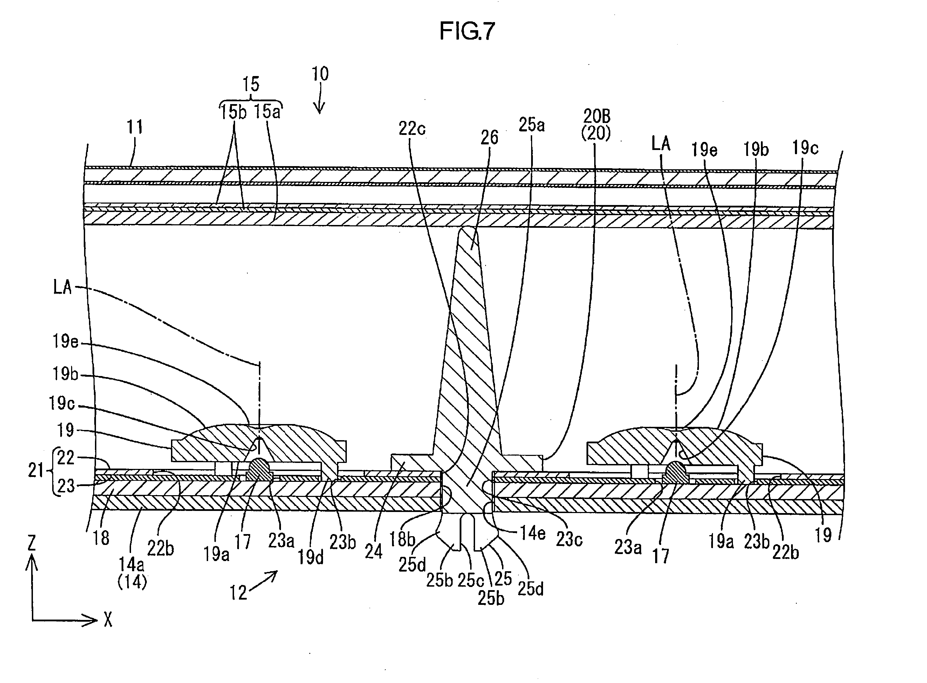

As shown in Fig. 2, like the liquid crystal panel 11 and the chassis 14, the optical member 15 is shaped like an oblong quadrangle (rectangular) in a plan view. As shown in Figs. 4 and 5, the optical member 15 covers the openings 14b of the chassis 14 by placing its outer edge on the receiving plates 14d, and is interposed between the liquid crystal panel 11 and the LEDs 17. The optical member 15 consists of the diffuser 15a arranged on the back side (the LEDs 17 side, i.e. the side opposite to the light-emitting side) and the optical sheets 15b arranged on the front side (the liquid crystal panel 11 side, i.e. the light-emitting side). The diffuser 15a is formed by dispersing multiple diffusing particles in a substantially transparent resin base member having a predetermined thickness and has a function of diffusing transmitted light. The optical sheet 15b is shaped like a thinner sheet than the diffuser 15a and two sheets are laminated (Figs. 7 to 9). Specific examples of the optical sheets 15b include diffuser sheets, lens sheets, reflection type polarizing sheets, and it is possible to select and use any of these sheets as appropriate.

As shown in Fig. 2, the frame 16 is shaped like a frame along outer circumferences of the liquid crystal panel 11 and the optical member 15. The outer edge of the optical member 15 is configured to be pinched between the frame 16 and each of the receiving plates 14d (Figs. 4 and 5). The frame 16 can receive the outer edge of the liquid crystal panel 11 from the back side and pinch the outer edge of the liquid crystal panel 11 between the frame 16 and the bezel 13 arranged on the front side (Figs. 4 and 5).

Next, the LEDs 17 and the LED boards 18 that mount the LEDs 17 thereon will be described in detail. As shown in Fig. 7, Fig. 8 and Fig. 10, each of the LEDs 17 is formed by sealing an LED chip on a board portion fixedly attached to the LED board 18 with a resin material. The LED chip mounted on the board portion has one type of main light-emitting wavelength, and specifically, emits only blue light. Meanwhile, phosphors converting blue light emitted by the LED chip into white light are dispersedly mixed in the resin material sealing the LED chip. Thereby, the LED 17 can emit white light. This LED 17 is a so-called top type in which a surface on the side opposite to the mounting surface of the LED board 18 acts as a light-emitting surface 17a. An optical axis LA in the LED 17 substantially corresponds to the Z axis direction (the direction orthogonal to the liquid crystal panel 11 and a main plate surface of the optical member 15). Light emitted from the LEDs 17 extends radially to some extent about the optical axis LA within a predetermined angular range in a three-dimensional way, and has a higher directivity than light from a cold cathode tube. That is, the light emission intensity of the LED 17 becomes remarkably high in a direction along the optical axis LA and rapidly lowers as inclination angle relative to the optical axis LA is larger.

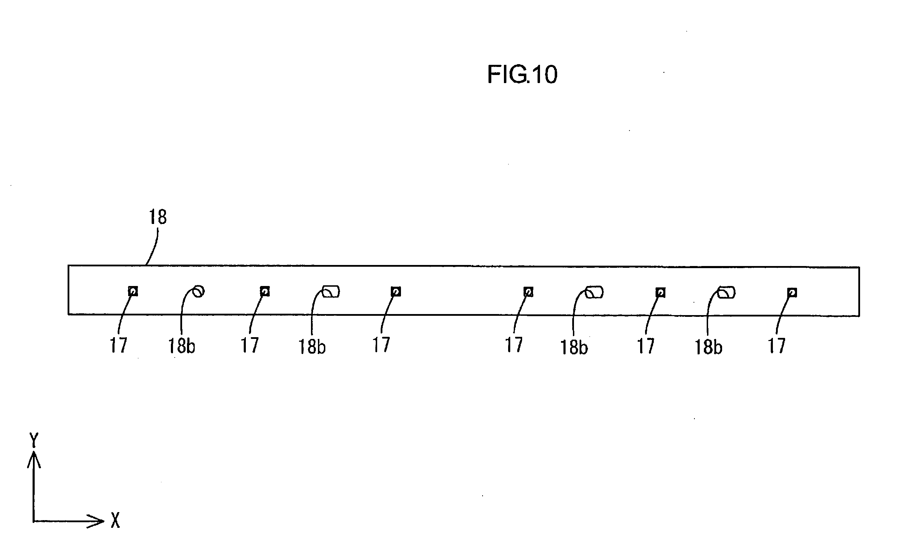

As shown in Fig. 10, the LED board 18 has a rectangular (strip-like) base material in a plan view, extends along the bottom plate 14a and is stored in the chassis 14 so that its long-side direction matches the X axis direction and its short-side direction matches the Y axis direction (Fig. 3).The base member of the LED board 18 is made of metal such as aluminum material that is the same as the material for the chassis 14, and has a surface on which a wiring pattern formed of a metal film such as a copper foil is formed via an insulating layer. Insulating materials such as ceramic may be used as the material for the base member of the LED board 18. As shown in Fig. 7, Fig. 8 and Fig. 10, the LEDs 17 having the above-mentioned configuration are mounted on a surface facing the front side (surface facing the optical member 15 side) among surfaces of the base member of the LED board 18. The plurality of LEDs 17 is arranged linearly along the long-side direction of the LED boards 18 (X axis direction) in parallel, and is serially connected according to the wiring pattern formed on the LED boards 18. The alignment pitch of the LEDs 17 is almost constant, that is, the LEDs 17 are arranged at regular intervals. It can be said that the LED board 18 is configured of a plurality of LED arrangement portions on which the LEDs 17 is individually arranged, and a plurality of arrangement portion-connecting portions connecting the adjacent LED arrangement portions to each other. Each of the LED boards 18 has a connector portion 18a at both ends thereof in the long-side direction, which constitutes the connector arrangement portion.

As shown in Fig. 3, the LED boards 18 having the above-mentioned configuration is arranged in the chassis 14 in each of the X axis direction and the Y axis direction so that the LED boards 18 are aligned in the long-side direction and the short-side direction in parallel. That is, the LED boards 18 and the LEDs 17 mounted thereon are arranged in the chassis 14 in a matrix having the X axis direction (the long-side direction of the chassis 14 and the LED board 18) as a row direction and the Y axis direction (the short-side direction of the chassis 14 and the LED board 18) as the column direction. Specifically, the three LED boards 18 in the X axis direction x the nine LED boards 18 in the Y axis direction, that is, 27 LED boards 18 in total are arranged in the chassis 14 in parallel. In this embodiment, two types of LED boards 18 having different long-side dimensions and the number of mounted LEDs 17 are used. Specifically, a six-mounted type of the LED board 18 that mounts the six LEDs 17 thereon and has a relatively long long-side dimension and a five-mounted type of the LED board 18 that mounts the five LEDs 17 thereon and has a relatively short long-side dimension are used as the LED boards 18, and the six-mounted type of the LED board 18 is arranged at each end of the chassis 14 in the X axis direction and the five-mounted type of the LED board 18 is arranged at the center in the same direction. As described above, the LED boards 18 aligned in one row in the X axis direction are electrically connected to each other by fitting the adjacent connector portions 18a with each other, and the connector portions 18a located at both ends of the chassis 14 in the X axis direction are each electrically connected to an external control circuit not shown. Thereby, the LEDs 17 arranged on the LED board 18 forming one row are serially connected to one another, so that lighting-on and off of the multiple LEDs 17 contained in the one row can be controlled together by one control circuit, which enables reduction in costs. Even the different types of LED boards 18 having different long-side dimensions and the number of mounted LEDs 17 have the substantially identical short-side dimension and alignment pitch of the LEDs 17. The arrangement of the LED boards 18 with respect to the chassis 14 corresponds to that of the board arrangement areas BA in the bottom plate 14a. Accordingly, the board non-arrangement areas NBA are arranged in the bottom plate 14a in a form of a lattice surrounding each of the board arrangement areas BA in a matrix (Fig. 16).

By preparing plural types of LED boards 18 having different long-side dimensions and the number of mounted LEDs 17 and appropriately using the different types of LED boards 18 in combination, following effects are obtained. In other words, various types of liquid crystal display devices 10 of different screen sizes can be easily manufactured by appropriately selecting use/nonuse of each type of the LED board 18 and changing the number of each type of the LED boards 18 according to each screen size. As compared to the case where the dedicated LED board having the same long-side dimension as the long-side dimension of the chassis 14 is prepared for each screen size, the number of types of necessary LED boards 18 can be greatly reduced and therefore, manufacturing costs an be reduced. Specifically, by adding an eight-mounted type LED board that mounts eight LEDs 17 thereon to the above-mentioned two types of LED boards 18 (the five-mounted type and the six-mounted type) and appropriately using the three types of LED boards 18 in combination, each of the liquid crystal display devices 10 having the screen size of 26 inches, 32 inches, 37 inches, 40 inches, 42 inches, 46 inches, 52 inches and 65 inches can easily be manufactured.

The diffuser lenses 19 are made of a synthetic resin material (e.g. polycarbonate and acrylic) that is substantially transparent (highly light transmissive) and has a higher refractive index than air. As shown in Fig. 7, Fig. 8 and Fig. 11, the diffuser lenses 19 each have a predetermined thickness, are formed to be substantially circular in a plan view, and are attached so as to cover the respective LEDs 17 from the front side of the LED board 18, that is, to overlap with the respective LEDs 17 in a plan view. The diffuser lenses 19 can emit highly directive light from the LEDs 17 while diffusing the light. That is, since directivity of the light emitted from the LEDs 17 is reduced through the diffuser lenses 19, even when the interval of the adjacent LEDs 17 is set large, an area between the LEDs 17 is hard to be visually recognized as a dark place. Thereby, the number of installed LEDs 17 can be reduced. Each diffuser lens 19 is located to be substantially concentric with each LED 17 in a plan view. Each diffuser lens 19 has sufficiently larger dimensions in the X axis direction and in the Y axis direction than each LED 17. The diffuser lens 19 has a diameter larger than the short-side dimension of the LED board 18 (dimension in the Y axis direction), but is smaller than the long-side dimension of the LED board 18 (dimension in the X axis direction). Accordingly, both ends of the diffuser lens 19 in the Y axis direction each protrude outward by a predetermined dimension from the LED board 18 in the Y axis direction. In other words, both the outer edges of the LED board 18 on the side of the long side (outer edges located at both ends in the Y axis direction) overlap with the diffuser lens 19 in a plan view. Conversely speaking, the short-side dimension of the LED board 18 is smaller than the diameter of the diffuser lens 19 so that a minimum necessary dimension for implementing the diffuser lens 19 (specifically, dimension that allows each attachment leg portion 19d described later) is ensured, thereby reducing material costs for the LED board 18.

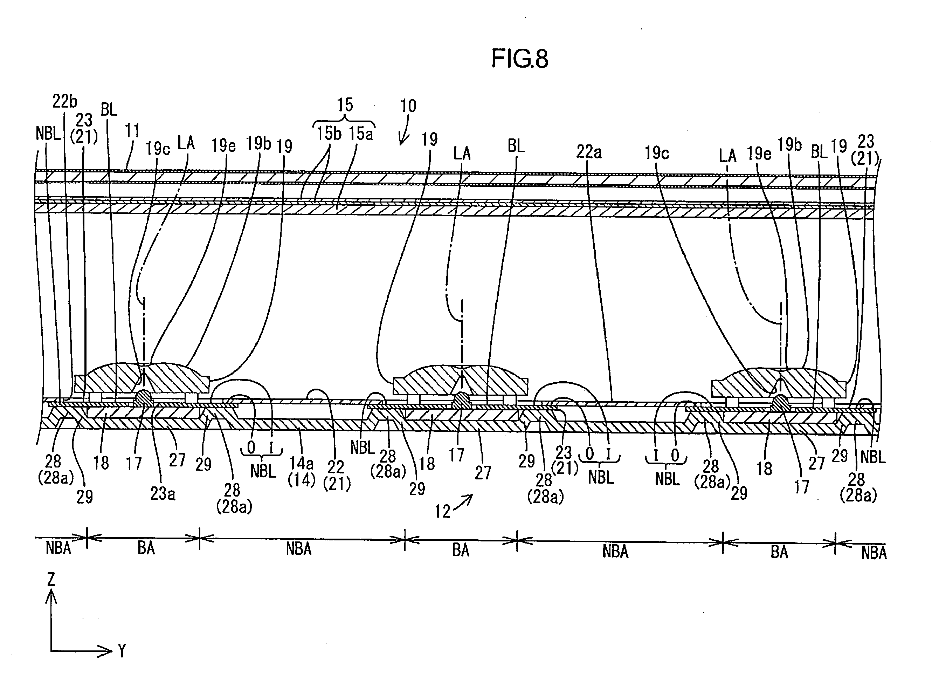

In each of the diffuser lenses 19, a surface that faces the back side and is opposite to the LED board 18 is a light incidence surface 19a on which light from the LED 17 is incident, while a surface that faces the front side and is opposite to the optical member 15 is a light emitting surface 19b. As shown in Figs. 7 and 8, the light incidence surface 19a extends in parallel to a plate surface of the LED board 18 (the X axis direction and the Y axis direction) as a whole, but has an inclined surface obtained by forming a light incidence-side concave portion 19c in an area where the light incidence surface 19a and the LED 17 overlap with each other in a plan view. The light incidence-side concave portion 19c is substantially conical, is located to be almost concentric with the diffuser lens 19 and is opened toward the back side, that is, the LED 17. The light incidence-side concave portion 19c has the largest diameter at its opened end facing the LED 17, which is larger than the diameter of the LED 17, and becomes smaller toward the front side in diameter continually and gradually, and finally becomes the smallest at its end of the front side. The light incidence-side concave portion 19c has a substantially inverted V-shaped cross section and a circumferential surface thereof is inclined relative to the Z axis direction. The inclined surface is inclined so that the end of the front side crosses the optical axis LA of the LED 17. Accordingly, the light emitted from the LED 17 and entering into the light incidence-side concave portion 19c is incident into the diffuser lens 19 through the inclined surface. At this time, the incident light is refracted away from the center, that is, with a wide angle, by an inclined angle of the inclined surface relative to the optical axis LA and is incident into the diffuser lens 19.

The light incidence surface 19a of the diffuser lens 19 has attachment shaft portions 19d at positions outer of the light incidence-side concave portion 19c in the radial direction. The attachment shaft portions 19d protrude toward the LED board 18 and serve as attachment structure of the diffuser lens 19 to the LED board 18. The attachment shaft portions 19d are located closer to an outer edge than the light incidence-side concave portion 19c in the diffuser lens 19, and a line connecting the attachment shaft portions 19d is substantially equilateral-triangular in a plan view. By fixing each of front ends of the attachment shaft portions 19d to the LED board 18 with an adhesive or the like, the diffuser lens 19 can be fixedly attached to the LED board 18. The diffuser lens 19 is fixed to the LED board 18 through the attachment shaft portions 19d so as to have a predetermined gap between the light incidence surface 19a and the LED board 18. This gap allows incidence of light from space outer of the diffuser lens 19 in a plan view. In the above-mentioned attachment state, a front end of the LED 17 protruding from the LED board 18 enters into the light incidence-side concave portion 19c.

The light emitting surface 19b in the diffuser lens 19 is shaped like a substantially flat spherical surface. Thereby, the diffuser lens 19 can emit light while refracting the light on an interface with an external air layer in a direction away from the center, that is, with a wide angle. The light emitting surface 19b has a light-emitting side concave portion 19e. The light-emitting side concave portion 19e is formed in an area where the light emitting surface 19b overlaps with the LED 17 in a plan view. The light-emitting side concave portion 19e is substantially bowl-like and is shaped like a substantially flat sphere having a circumferential surface inclined downward toward the center. An angle that a tangent line to the circumferential surface of the light-emitting side concave portion 19e forms with the optical axis LA of the LED 17 is set to be larger than an angle that the inclined surface of the light incidence-side concave portion 19c forms with the optical axis LA. The area where the light emitting surface 19b overlaps with the LED 17 in a plan view receives extremely larger light amount from the LED 17 than the other area and therefore, its brightness tends to locally become high. However, by forming the light-emitting side concave portion 19e in the area, it becomes possible to emit most of the light from the LED 17 while refracting the light with a wide angle, or reflect a part of the light from the LED 17 toward the LED board 18. Thereby, it is possible to prevent the brightness of the area where the light emitting surface 19b overlaps with the LED 17 from locally becoming high, which is preferable for prevention of uneven brightness.

Next, the reflection sheet 21 will be described. The reflection sheet 21 consists of a chassis reflection sheet 22 (chassis reflection member) that covers the entire inner surface of the chassis 14, that is, crosses over all of the LED boards 18 and a board reflection sheet 23 (board reflection member) that independently covers each LED board 18. The board reflection sheet 23 is placed on the front side of the LED board 18, while the chassis reflection sheet 22 is placed on the front side of the board reflection sheet 23. In other words, the board reflection sheet 23 and the chassis reflection sheet 22 of the reflection sheet 21 are laminated on the front side surface of the LED board 18 in this order, and the board reflection sheet 23 is interposed between the LED board 18 and the chassis reflection sheet 22. The reflection sheets 22 and 23 each are made of synthetic resin, have a surface of white color having a high light reflectance. The reflection sheets 22 and 23 extend in the chassis 14 along the bottom plate 14a (LED board 18).

First, the chassis reflection sheet 22 will be described. As shown in Fig. 3, most part of a center part of the chassis reflection sheet 22, which extends along the bottom plate 14a of the chassis 14 (opposite to the bottom plate 14) is a body portion 22a. The body portion 22a has almost the same dimension as the bottom plate 14a in a plan view, and can cover the board arrangement areas BA and the board non-arrangement areas NBA of the bottom plate 14a together. That is, the body portion 22a is sufficiently larger than each LED board 18 in a plan view.

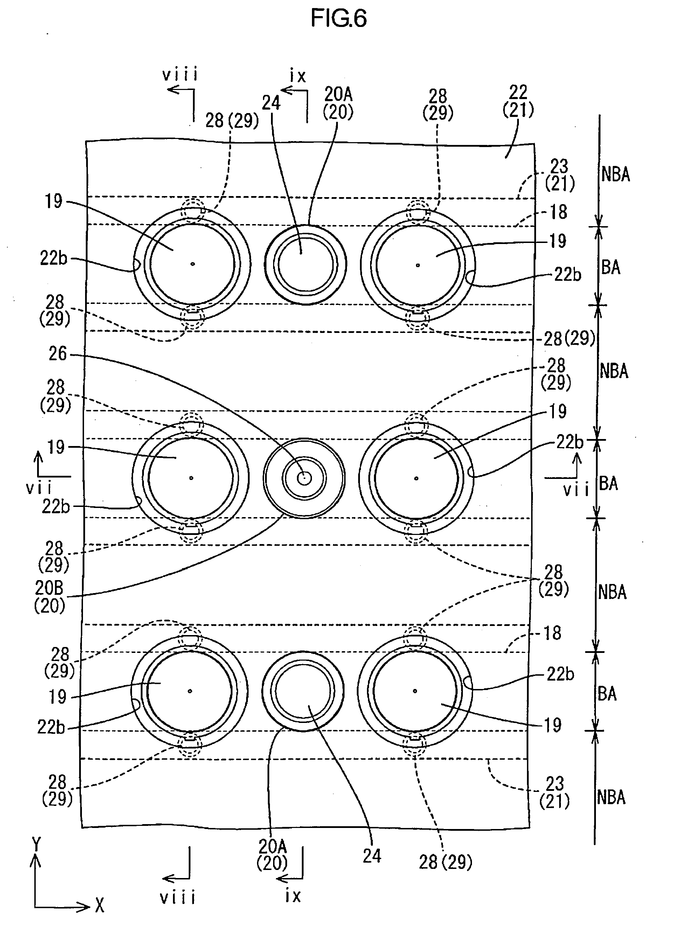

The body portion 22a includes a penetrating (opened) lens insertion hole 22b (hole) configured to pass each LED 17 arranged in the chassis 14 and the diffuser lens 19 covering each LED 17 therethrough. The plurality of lens insertion holes 22b is arranged in parallel at positions where the lens insertion holes 22b overlap with the LEDs 17 and diffuser lenses 19 on the body portion 22a in a plan view in a matrix. As shown in Fig. 6, each lens insertion hole 22b is circular in a plan view and has a larger diameter than the diffuser lens 19. As a result, after the LED board 18 on which the diffuser lens 19 is implemented is attached in the chassis 14, the operation of installing the chassis reflection sheet 22 can be achieved. Further, in installing the chassis reflection sheet 22 in the chassis 14, each diffuser lens 19 can be reliably inserted into each lens insertion hole 22b irrespective of presence/absence of occurrence of dimension error. Since the diameter of the diffuser lens 19 is larger than the short-side dimension of the LED board 18, the diameter of the lens insertion hole 19 is larger than the short-side dimension of the LED board 18, and the lens insertion hole 22b is larger than the LED board 18 in the Y axis direction in a plan view.

As shown in Fig. 3, the chassis reflection sheet 22 covers an outer circumferential area and areas between the adjacent diffuser lenses 19 in the chassis 14 and thus, can reflect light incident to the areas toward the optical member 15. The body portion 22a includes a hole through which a connector part 18a is passed and is formed at an overlapping position with the connector part 18a in a plan view. Further, as shown in Figs. 4 and 5, outer circumferential portions of the chassis reflection sheet 22 rise so as to cover the side plates 14c and the receiving plates 14d of the chassis 14, and portions placed on the receiving plates 14d are sandwiched between the chassis 14 and the optical member 15. The chassis reflection sheet 22 has an inclined portion which connects the body portion 22a with each of the portions placed on the receiving plates 14d.

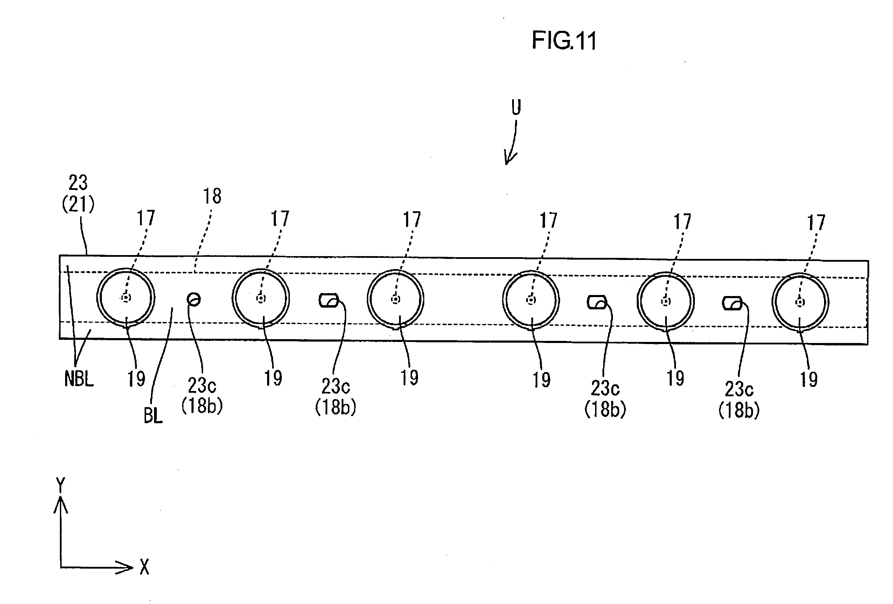

Meanwhile, the board reflection sheet 23 has, as shown in Fig. 11, almost the same appearance as the LED board 18, that is, is rectangular in a plan view. The board reflection sheet 23 is arranged so as to overlap with the front side surface of the LED board 18 and cover the almost entire area of the LED board 18 from the front side. As shown in Figs. 7 and 8, the board reflection sheet 23 is interposed between the diffuser lens 19 and the LED board 18, and is opposed to the diffuser lens 19. That is, the board reflection sheet 23 is arranged in the lens insertion hole 22b formed in the chassis reflection sheet 22 placed on the front side in a plan view.

As shown in Fig. 11, the board reflection sheet 23 has the almost same long-side dimension as the LED board 18 and has a larger short-side dimension than the LED board 18. That is, the board reflection sheet 23 is larger than the LED board 18 in the Y axis direction in a plan view, and is projected outward from the both outer edges of the LED board 18 on the side of the long side (both outer edges opposite to each other) in the Y axis direction. The center part of the board reflection sheet 23 in the short-side direction (Y axis direction) is set to a board overlapping part BL placed on the front side of the LED board 18 (overlaps with the LED board 18 in a plan view), while the both ends in the short-side direction are set to a pair of board nonoverlapping parts NBL that are projected outward from both the outer edges of the LED board 18 on the side of the long side (the both outer edges in the short-side direction) in the Y axis direction and do not overlap with the LED board 18 (do not overlap in a plan view). The board overlapping part BL corresponds to a board arrangement area BA of the bottom plate 14a of the chassis 14 in a plan view, while the both board nonoverlapping parts NBL are arranged in a board nonarrangement area NBA of the bottom plate 14a of the chassis 14 in a plan view. Describing in detail, the both board nonoverlapping parts NBL are located at ends of the board nonarrangement area NBA in the Y axis direction.

As shown in Figs. 6 and 8, the short-side dimension of the board reflection sheet 23 is set to be larger than the diameter of the diffuser lens 19 and the lens insertion hole 22b of the chassis reflection sheet 22. That is, the board reflection sheet 23 is arranged in almost entire area opposite to the diffuser lens 19 as well as in almost entire area in the lens insertion hole 22b in a plan view (including the area between the diffuser lens 19 and the lens insertion hole 22b in a plan view) and overlaps with the edge of the lens insertion hole 22b. Accordingly, the light returned at the diffuser lens 19 to the LED board 18 or enters from a space outer of the diffuser lens 19 in a plan view into a space between the diffuser lens 19 and the LED board 18 toward the lens insertion hole 22b can be reflected toward the diffuser lens 19 by the board reflection sheet 23 again. As a result, the light utilization efficiency can be enhanced, thereby increasing brightness. In other words, even when the number of installed LEDs 17 is reduced to cut costs, sufficient brightness is obtained. Moreover, since the edge of the lens insertion hole 22b in the chassis reflection sheet 22 is placed on the board reflection sheet 23 from the front side, the chassis reflection sheet 22 and the board reflection sheet 23 are continuously arranged without any break in the chassis 14 in a plan view, resulting in that the chassis 14 or the LED board 18 is hardly exposed from the lens insertion hole 22b to the front side. Therefore, the light in the chassis 14 can be efficiently reflected toward the optical member 15, which is extremely preferable for improvement of brightness. The board overlapping part BL and a part of the both board nonoverlapping parts NBL (specifically, parts adjacent to the board overlapping part BL) in the board reflection sheet 23 are arranged in the lens insertion hole 22b.

An LED insertion holes 23a through which each of the LEDs 17 are passed are formed in the board reflection sheet 23 so as to overlap with each of the LEDs 17 on the LED board 18 in a plan view. The LED insertion hole 23a in the board reflection sheet 23 is arranged in parallel with the same arrangement pitch as that of the LEDs 17, and the diameter of the LED insertion hole 23a is larger than the LED 17, but is smaller than the lens insertion hole 22b in the chassis reflection sheet 22 and the diffuser lens 19. A leg insertion hole 23b through which the attachment leg portion 19d of the diffuser lens 19 is passed is formed in the board reflection sheet 23 so as to overlap with the attachment leg portion 19d in a plan view. The board reflection sheet 23 is configured of a plurality of LED-surrounding-reflection portions (diffuser lens-surrounding-reflection portions) each surrounding respective LEDs 17 and a plurality of reflection portion-connecting portions connecting the adjacent LED-surrounding-reflection portions to each other.

Subsequently, the holding member 20 will be described below. The holding member 20 is classified into two types: a multifunctional holding member 20B having both of the function of holding the LED board 18 (each of the reflection sheets 22 and 23) and the function of supporting the optical member 15 and a monofunctional holding member 20A having the holding function and no supporting function. Hereinafter, when the holding member 20 needs to be distinguished, a subscript A is added to the reference numeral of the monofunctional holding member, a subscript B is added to the reference numeral of the multifunctional holding member and no subscript is added to the holding member that is not distinguished and is collectively called.

First, arrangement of the holding members 20 in the chassis 14 will be described. As shown in Fig. 3, multiple holding members 20 are arranged on the bottom plate 14a of the chassis 14. Describing in detail, given that the X axis direction (the long-side direction of the chassis 14 and the LED board 18) is the row direction and the Y axis direction (the short-side direction of the chassis 14 and the LED board 18) in the bottom plate 14a, the holding members 20 are arranged in the row and column directions (arranged in a matrix). Each holding member 20 is located at an overlapping position with each LED board 18 in a plan view and between the adjacent diffuser lenses 19 (LEDs 17). Accordingly, the holding members 20 are arranged like the above-mentioned diffuser lenses 19 and the LEDs 17. Since one holding member 20 is arranged in a area between the adjacent diffuser lenses 19 (LEDs 17) on the LED board 18, the diffuser lenses 19 (LEDs 17) and the holding members 20 are alternately arranged in the substantially X axis direction. Specifically, each LED board 18 has four holding members 20. On the six-mounted type of the LED board 18, the holding members 20 are arranged at positions other than the central position in the long-side direction in the areas between the adjacent diffuser lenses 19 (LEDs 17), and in the five-mounted type of LED board 18, the holding members 20 are arranged in all of the areas between the adjacent diffuser lenses 19 (LEDs 17).

As shown in Fig. 3, all of the multiple holding members 20 arranged as described above are the monofunctional holding members 20A except for below-mentioned two multifunctional holding members 20B. The two multifunctional holding members 20B are arranged at the center of the chassis 14 in the short-side direction and at the position closer to the center than an outer end in the long-side direction, respectively. Describing the arrangement in the long-side direction in detail, the multifunctional holding members 20B are located so as to be symmetrical about the central LED board 18 among the three LED boards 18 arranged in parallel in the X axis direction.

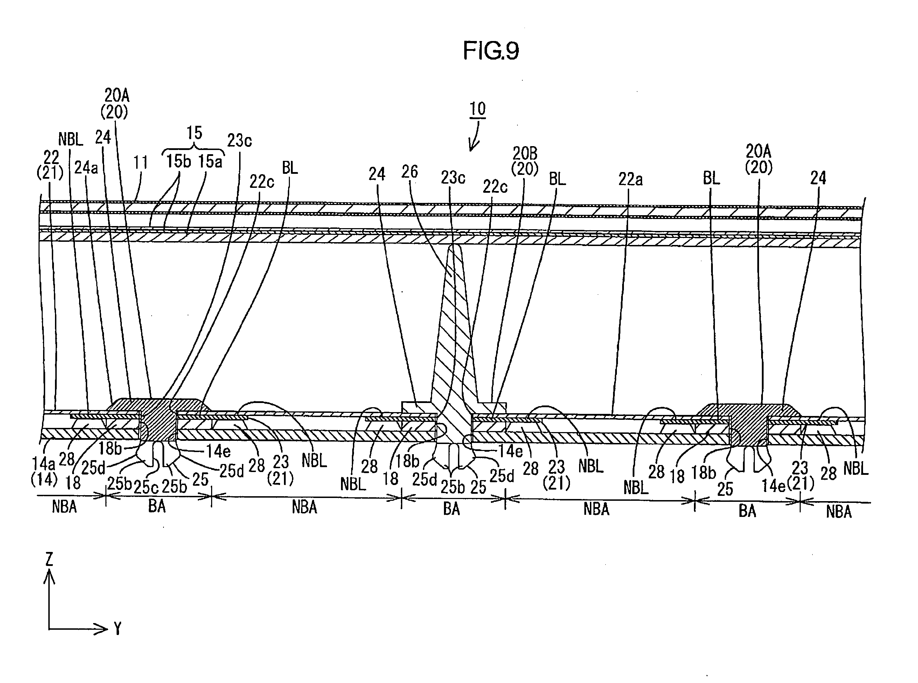

Subsequently, specific configuration of the holding member 20 will be described. Although the holding member 20 is classified into two types as described above, most of the configuration is common and the common configuration will first be described. The holding member 20 is made of synthetic resin such as polycarbonate and has a surface of white color having a high light reflectance. The holding member 20 is substantially circular as a whole in a plan view. As shown in Figs. 7 and 9, the holding member 20 includes a body portion 24 along the bottom plate 14a of the chassis 14 and the plate surface of the LED board 18 and a fixed portion 25 that protrudes from the body portion 24 toward the back side, that is, the chassis 14 and is fixed to the chassis 14. The holding member 20 is shaped to be symmetrical about the center axis along the Z axis direction as a whole.

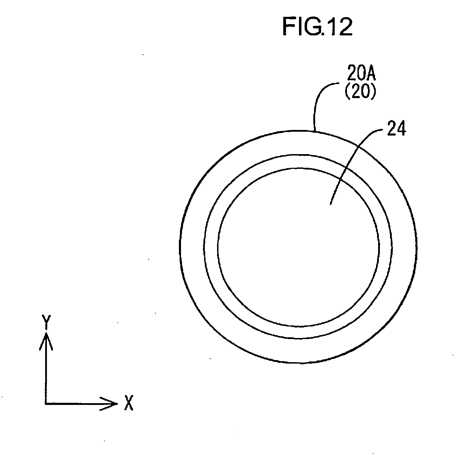

As shown in Figs. 12 to 15, the body portion 24 is substantially circular in a plan view, and is shaped like a plate extending substantially straight in the X axis direction and the Y axis direction. As shown in Fig. 6, the body portion 24 has the almost same diameter as the short-side dimension (dimension in the Y axis direction) of the LED board 188. The body portion 24 is attached at an overlapping position with the LED board 18 in a plan view, thereby holding the LED board 18 between the body portion 24 and the bottom plate 14a of the chassis 14. Since the body portion 24 is attached in the state where the reflection sheets 22 and 23 are previously arranged on the front side of the LED board 18, the body portion 24 can sandwich the LED board 18 and the reflection sheets 22 and 23 together (Figs. 7 and 9). That is, the holding member 20 according to this embodiment can pinch (hold) the reflection sheets 22, 23 and the LED board 18 as the extending members, which are laminated to one another, between the holding member and the chassis 14.

Describing in detail, as shown in Fig. 6, the body portion 24 is located so that its center corresponds to the center of the LED board 18 in the short-side direction. Accordingly, the body portion 24 can pinch the LED board 18 between the body portion and the chassis 14 over the entire length in the short-side direction. At this time, both outer ends of the body portion 24 in the Y axis direction substantially coincide with both outer ends of the LED board 18 in the short-side direction. That is, the body portion 24 overlaps the LED board 18 almost entirely in a plan view, thereby being prevented from extending outside of the LED board 18. The diameter of the body portion 24 is set to be smaller than the interval (alignment pitch) between the adjacent diffuser lenses 19 (LEDs 17) in the X axis direction. Thereby, the body portion 24 is arranged in the area between the adjacent diffuser lenses 19 (LEDs 17) of the LED board 18 in the X axis direction, that is, the unluminous part of the LED board 18, and does not overlap with the LED 17 in a plan view. That is, it can be prevented that the body portion 24 blocks light emission from the LED 17. In this embodiment, since the interval between LEDs 17 is made sufficiently large by using the diffuser lens 19 as described above, the holding member 20 is arranged in the space and fixes the LED board 18.

As shown in Fig. 9, the fixed portion 25 is configured to engage with the bottom plate 14a through the attachment hole 14e formed at the position corresponding to the attachment position of the holding member 20 on the bottom plate 14a of the chassis 14. The body portion 24 including the fixed portion 25 is arranged so as to entirely overlap with the LED board 18 in a plan view as described above (Fig. 6). Accordingly, the fixed portion 25 similarly overlaps with the LED board 18 in a plan view and thus, the LED board 18 includes a through hole 18b through which the fixed portion 25 is passed. As shown in Fig. 10, the through hole 18b is arranged between the adjacent LEDs 17 (diffuser lenses 19) on the LED board 18, that is, at the non-overlapping position with the LED 17 (diffuser lens 19) in a plan view. As shown in Fig. 7, Fig. 9 and Fig. 11, through holes 22c and 23c configured to communicate with the through hole 18b of the LED board 18 and pass the fixed portion 25 therethrough are formed at the overlapping position with the through hole 18b of the LED board 18 in a plan view in the reflection sheets 22 and 23 sandwiched between the body portion 24 and the LED board 18, respectively. The attachment hole 14e into and with which the fixed portion 25 is inserted and engaged is formed at the alignment position with the through holes 18b, 22c and 23c in a plan view in the bottom plate 14a of the chassis 14. The plurality of attachment holes 14e is arranged in parallel at the attachment positions of the holding members 20 on the bottom plate 14a of the chassis 14 in the X axis direction and the Y axis direction in a matrix.

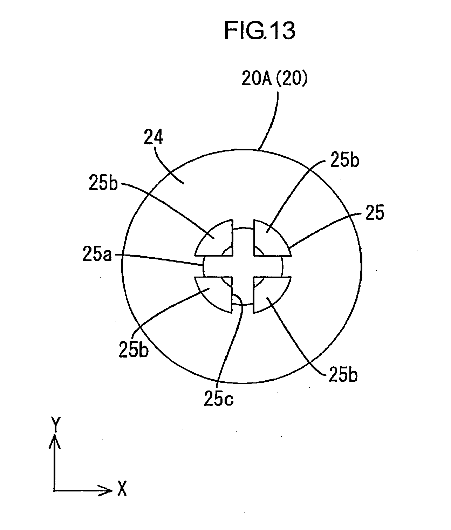

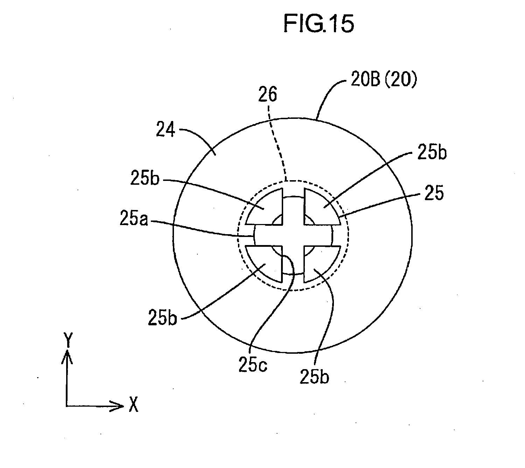

As shown in Figs. 13 and 15, the fixed portion 25 is located at the center of the body portion 24. Describing in detail, the fixed portion 25 is arranged to be concentric with the body portion 24. The fixed portion 25 protrudes, as shown in Fig. 9, from the back side surface of the body portion 24 (surface opposite to the chassis 14) toward the back side, and a grooved portion 25c is formed at a front end of the fixed portion 25 to form elastic engaged portions 25b. In other words, the fixed portion 25 consists of a bottom part 25a protruding from the body portion 24 toward the back side and the elastic engaging piece 25b further protruding from a protruding front end of the bottom part 25a toward the back side. The bottom part 25a is substantially cylindrical and has the diameter that is smaller than that of the attachment hole 14e of the chassis 14 and allows insertion into the through holes 18b, 22c and 23c and the attachment hole 14e.

As shown in Figs. 13 and 15, the elastic engaging piece 25b is divided into four by forming the grooved part 25c to be a cross in a plan view. As shown in Figs. 7 and 9, each elastic engaging piece 25b is cantilevered and can be elastically deformed so as to be recessed in the grooved part 25c using a protruding bottom end of the bottom part 25a as a fulcrum. That is, the grooved part 25c is a bending space of each elastic engaging piece 25b. The elastic engaging piece 25b has an engaging part 25d that expands outward, that is, to the side opposite to the grooved part 25c at an outer side surface thereof. The engaging part 25d protrudes further than an outer circumferential surface of the bottom part 25a, and the diameter at the expanding end of the fixed portion 25 (largest diameter) is set to be larger than the diameter of each of the through holes 18b, 22c and 23c and the attachment hole 14e. In other words, the expanding end of the engaging part 25d is located outer than an inner circumferential surface of the attachment hole 14e. Accordingly, the engaging part 25d is engaged with the edge of the attachment hole 14e in the chassis 14, that is, the part adjacent to the fixed portion 25 in the chassis 14 from the back side. When the fixed portion 25 is inserted into the attachment hole 14e of the chassis 14 in this manner, each elastic engaging piece 25b is inserted into the attachment hole 14e and then, is elastically engaged with the edge of the attachment hole 14e from the back side. Thereby, the holding member 20 can be fixedly attached to the chassis 14.

Next, difference between the two types of holding members 20 in configuration will be described. As shown in Fig. 9, in the monofunctional holding member 20A, the outer circumferential end surface of the body portion 24 includes an inclined surface 24 thereon. The inclined surface 24a is inclined downward from the center to the outer end of the body portion 24, thereby eliminating or reducing the step that can be generated between the body portion 24 and the chassis reflection sheet 22. As a result, the outer edge of the body portion 24 (boundary between body portion 24 and the reflection sheet 21) is hard to be visually recognized as uneven brightness through the optical member 15. Although not shown, the inclined surface 24a may be provided at the multifunctional holding member 20B.

As shown in Figs. 7 and 9, the multifunctional holding member 20B has an optical member supporting portion 26 that protrudes from the body portion 24 toward the front side and is configured to support the optical member 15 from the back side. The optical member supporting portion 26 is conical as a whole. Describing in detail, the optical member supporting portion 26 has a circular cross section taken along the plate surface of the body portion 24, and is tapered so that the diameter gradually reduces from its protruding bottom end to its protruding front end. The optical member supporting portion 26 is configured to contact with a diffuser plate 15a arranged closest to the back side (the side of the LED 17) in the optical member 15, thereby supporting the diffuser plate 15a at a predetermined position. That is, the optical member supporting portion 26 can restrict positional relationship between the optical member 15 and the LED 17 in the Z axis direction (direction orthogonal to the surface of the optical member 15) to a certain state.

The outer diameter of the optical member supporting portion 26 at the protruding bottom end is smaller than both the short-side dimension of the body portion 24 and the short-side dimension of the LED board 18. That is, the optical member supporting portion 26 is a point in a plan view, while the body portion 24 is a plane that is larger than the optical member supporting portion 26 in a plan view. The protruding dimension of the optical member supporting portion 26 is almost equal to the distance between the front side surface of the body portion 24 and the back side surface of the diffuser plate 15a extending substantially straight in the X axis direction and the Y axis direction. Accordingly, the optical member supporting portion 26 is configured to contact with the substantially straight diffuser plate 15a. The protruding front end of the optical member supporting portion 26 as a contact part with the diffuser plate 15a is rounded. Since only the optical member supporting portion 26 protrudes from the body portion 24 toward the front side in the multifunctional holding member 20B, in attaching the multifunctional holding member 20B to the chassis 14, the operator can use the optical member supporting portion 26 as the operating part. Thereby, workability in attaching or detaching the multifunctional holding member 20B can be improved.

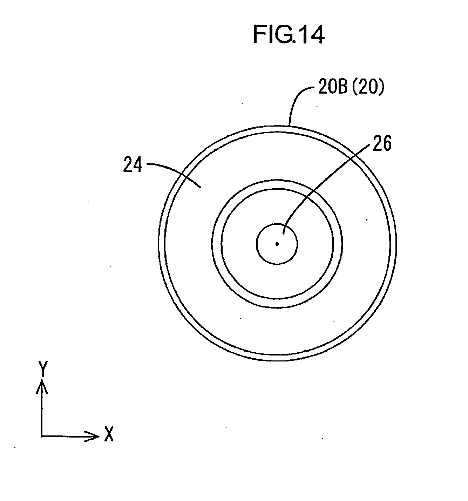

As shown in Figs. 14 and 15, the optical member supporting portion 26 is arranged substantially at the center of the body portion 24. That is, the optical member supporting portion 26 is arranged so as to overlap with the fixed portion 25 arranged on the back side in a plan view. Describing in more detail, the optical member supporting portion 26 and the fixed portion 25 are arranged so as to be substantially concentric with each other in a plan view. With this configuration, in attaching the multifunctional holding member 20B to the chassis 14, when the operator uses the optical member supporting portion 26 as the operating part, the operator can easily grasp the position of the fixed portion 25 hidden on the back side by viewing the optical member supporting portion 26 exposed on the front side. Accordingly, workability in inserting the fixed portion 25 into the attachment hole 14e can be improved.

Here, the board arrangement area BA of the bottom plate 14a of the chassis 14 according to this embodiment, in which the LED board 18 is arranged, constitutes a first supporting portion 27 that supports the LED board 18 from the back side, as shown in Fig. 8. The board overlapping part BL of the board reflection sheet 23 is placed on the front side of the LED board 18 supported by the first supporting portion 27, and the board overlapping part BL is supported by the front side surface of the LED board 18 (counter surface to the board reflection sheet 23). Meanwhile, a second supporting portion 28 that is more protruding (raised) than the first supporting portion 27 toward the front side and can support the board nonoverlapping part NBL of the board reflection sheet 23 is provided in the board nonarrangement area NBA of the bottom plate 14a of the chassis 14, in which the LED board 18 is not arranged. That is, in the chassis 14 according to this embodiment, in the board reflection sheet 23, the LED board 18, on which the board overlapping part BL is placed, is supported by the first supporting portion 27 arranged on the back side, and the board non-overlapping part NBL is supported by the second supporting portion 28 arranged on the front side, so that the support positions of the board overlapping part BL and the board non-overlapping part NBL in the board reflection sheet 23 in the Z axis direction (direction orthogonal to the bottom plate 14e and the plate surface of the board reflection sheet 23) align with each other, eliminating a step.

The second supporting portion 28 is formed by partially protruding the board non-arrangement area NBA of the bottom plate 14a toward the front side, that is, the side of the opening 14b. The protruding dimension of the second supporting portion 28 from the board nonarrangement area NBA toward the front side is the almost same as the thickness of the LED board 18. Accordingly, the front side surface of the second supporting portion 28, that is, the opposite surface (supporting surface) to the board reflection sheet 23 is flush with the LED board 18. In other words, the support positions of the board overlapping part BL and the board non-overlapping part NBL in the board reflection sheet 23 on the side of the chassis in the Z axis direction are almost equal to each other, eliminating a step substantially completely. As a result, the board overlapping part BL and the board nonoverlapping part NBL of the board reflection sheet 23 are supported by the LED board 18 and the second supporting portion 28 without any step, thereby ensuring the whole flatness. Therefore, stress concentration on the boundary between the board overlapping part BL and the board nonoverlapping part NBL can be mitigated, thereby suppressing deformation.

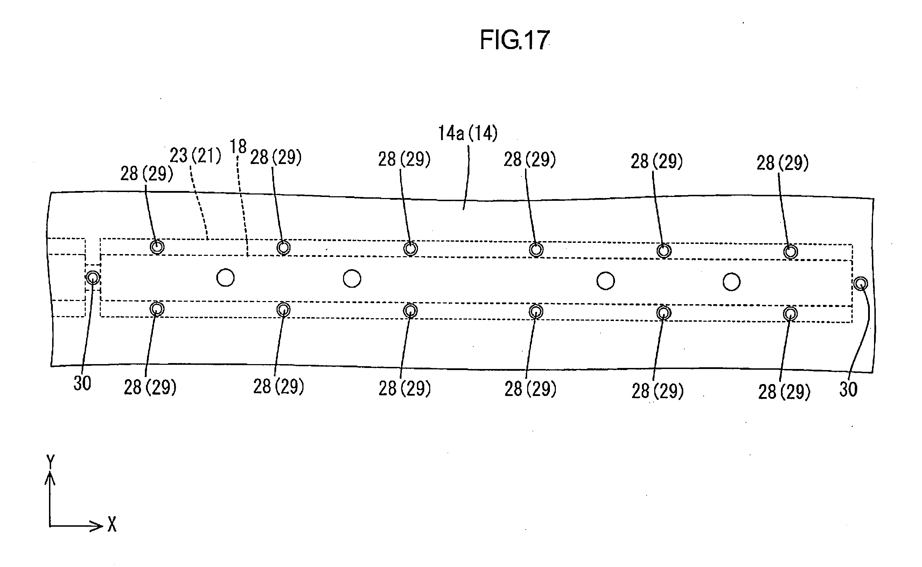

As shown in Fig. 8,Fig. 16 and Fig. 17, each of the second supporting portions 28 is arranged in a part of board nonarrangement area NBA, which is adjacent to each board arrangement area BA (each LED board 18) in the Y axis direction. As shown in Figs. 16 and 17, the plurality of second supporting portions 28 is substantially point-like in the board nonarrangement area NBA in a plan view, and is intermittently arranged in parallel along the outer edges of the LED board 18 on the side of the long side (X axis direction). Describing in detail, each second supporting portion 28 is substantially circular in a plan view, and its diameter is larger than the interval between the diffuser lens 19 and the lens insertion hole 22b in a plan view and is the almost same as the dimension of the board nonoverlapping part NBL in the Y axis direction. The number of the second supporting portions 28 arranged in parallel in the X axis direction is equal to the number of the LEDs 17 arranged on the LED board 18 in parallel, and the second supporting portions 28 are arranged with respect to the LEDs 17 in the Y axis direction, that is, in the projecting direction of the board reflection sheet 23 from the outer edges of the LED board 18 on the side of the long side. That is, each second supporting portion 28 is arranged in the same manner as each LED 17 in the X axis direction, and is located closest to each LED 17. Accordingly, the interval (arrangement pitch) between the adjacent second supporting portions 28 in the X axis direction is the almost same as the interval between the LEDs 17 on the LED board 18. In other words, the second supporting portion 28 of the board reflection sheet 23 is located so as to overlap with each LED-surrounding-reflection portion 33 surrounding each LED 17. Further, the pair of second supporting portions 28 is provided so as to sandwich respective LED boards 18 therebetween in the Y axis direction (short-side direction) (between the adjacent LED board 18). Accordingly, each second supporting portion 28 of the board reflection sheet 23 can support each of the pair of board nonoverlapping parts NBL projected from both the outer edges of the LED board 18 on the side of the long side.

As shown in Fig. 8, each second supporting portion 28 has a cross section of substantially trapezoidal shape, and a protruding front end portion 28a has a supporting surface for the board reflection sheet 23. The second supporting portion 28 is molded integrally with the chassis 14 by drawing, for example, the bottom plate 14a of the chassis 14. In the protruding front end portion 28a of the second supporting portion 28 (portion having the supporting surface for the board reflection sheet 23), a part on the side of the LED board 18 in the Y axis direction is arranged in the lens insertion hole 22b in a plan view, and a part on the opposite side to the LED board 18 overlap with the edge of the lens insertion hole 22b in a plan view. That is, the second supporting portion 28 is arranged over the inner and outer sides of the lens insertion hole 22b. Accordingly, the second supporting portion 28 can support both of an inner part I that is arranged in the lens insertion hole 22b in a plan view and does not overlap with the chassis reflection sheet 22 and an outer part O that is arranged outside of the lens insertion hole 22b in a plan view and overlaps with the edge of the lens insertion hole 22b, in the board nonoverlapping part NBL of the board reflection sheet 23, from the back side, and comes in surface contact with the parts without any step. As described above, the inner part I arranged in the lens insertion hole 22b in a plan view in the board nonoverlapping part NBL is supported by the second supporting portion 28 to suppress deformation, thereby reflecting light toward the inside of the lens insertion hole 22b without unevenness. Moreover, the outer part O overlapping with the edge of the lens insertion hole 22b in a plan view in the board nonoverlapping part NBL is supported by the second supporting portion 28 to suppress deformation, thereby preventing a gap from being generated between the edge of the lens insertion hole 22b and the outer part O of the board nonoverlapping part NBL in the Z axis direction and thus, preventing light from leaking from the gap. The protruding front end portion 28a of the second supporting portion 28 has a dimension that can support a part between a projecting bottom end and a projecting front end from the outer edges of the LED board 18 (a part except for the projecting bottom end and the projecting front end) in the board nonoverlapping part NBL of the board reflection sheet 23.

Each part opposite (adjacent) to the LED board 18 in the protruding bottom end of the second supporting portion 28 comes in contact with the outer edge of the LED board 18 to constitute a board positioning portion 29 that can position the LED board 18. That is, the second supporting portion 28 has the board positioning portion 29 in an integrating manner. The board positioning portions 29 are in contact with the outer edge of the LED board 18 on the side of the long side, thereby positioning the LED board 18 in the Y axis direction. As described above, the pair of second supporting portions 28 is provided so as to sandwich the LED board 18 therebetween in the Y axis direction and the interval between the pair of second supporting portions 28 is the almost same as the short-side dimension of the LED board 18. That is, the pair of second supporting portions 28 can store the LED board 18 therebetween, and the board positioning portions 29 sandwich the stored LED board 18 from both the outer sides in the Y axis direction, thereby positioning the LED board 18 in the Y axis direction substantially without any rattling. The plurality of board positioning portions 29 is intermittently arranged in parallel along the outer edges of the LED board 18 on the side of the long side. Therefore, each board positioning portion 29 can effectively prevent the LED board 18 from being inclined in the long-side direction.

As shown in Figs. 16 to 18, a second board positioning portion 30 configured to position the LED board 18 in the X axis direction is provided adjacent to each edge of the LED board 18 on the side of the short side on the bottom plate 14a of the chassis 14. Similar to the second supporting portion 28, the second board positioning portion 30 is formed by partially protruding the bottom plate 14a of the chassis 14 toward the front side to be substantially circular and have a cross section of a substantially trapezoidal shape. The second board positioning portions 30 are in contact with the outer edges of the LED board 18 on the side of the short side, thereby positioning the LED board 18 in the X axis direction. The pair of second board positioning portions 30 is arranged so as to sandwich the LED board 18 therebetween in the Y axis direction (long-side direction), and the interval between the both second board positioning portions 30 is the almost same as the long-side dimension of the LED board 18. Accordingly, both the second board positioning portions 30 can sandwich the LED board 18 from the both outer sides in the X axis direction, thereby positioning the LED board 18 in the X axis direction substantially without any rattling. In this manner, the LED board 18 is positioned in the X axis direction and the Y axis direction, which are orthogonal to each other, in a two-dimensional way by the board positioning portions 29 and 30. Each second board positioning portion 30 is arranged at the center of the LED board 18 in the Y axis direction.

This embodiment has the above-mentioned configuration, and its action will be described. The liquid crystal display device 10 shown in Figs. 4 and 5 is manufactured by separately manufacturing the liquid crystal panel 11 and the backlight unit 12 and assembling them by use of the bezel 13 or the like. Especially, the assembling operation in manufacturing the backlight unit 12 will be described in detail.

In this embodiment, prior to assembling of each constituent to the chassis 14, LEDs 17, the board reflection sheet 23 and the diffuser lenses 19 are attached to the LED board 18. Describing in detail, first, as shown in Fig. 10, after the LEDs 17 are mounted at predetermined positions on the LED board 18, the board reflection sheet 23 is attached to cover the front side. At this time, each LED 17 is inserted into each LED insertion hole 23a of the board reflection sheet 23, and the LED board 18 and the through holes 18b and 23c of the board reflection sheet 23 are aligned and communicated with one another. After that, as shown in Fig. 11, the diffuser lenses 19 are attached to the LED board 18 so as to cover the respective LEDs 17. At this time, the attachment shaft portions 19d of the diffuser lenses 19 are fixedly adhered to the LED board 18 with an adhesive through the respective shaft portion insertion holes 23b in the board reflection sheet 23. In this manner, a so-called light source unit U formed by uniting the LEDs 17, the board reflection sheet 23 and the diffuser lenses 19 is manufactured on the LED board 18. In this state, in the board reflection sheet 23, although the board overlapping part BL is supported by the LED board 18 from the back side, both the board nonoverlapping parts NBL are not supported by the LED board 18.

Subsequently, an assembling operation of each component to the chassis 14 will be described. First, the light source units U are stored from the front side of the chassis 14 through the openings 14b and are arranged at predetermined attachment positions on the bottom plate 14a. In arranging the LED board 18, the LED board 18 is stored in a space surrounded by the second supporting portions 28 (board positioning portions 29) and the second positioning portions 30, which are provided at the attachment positions (board arrangement area BA) of the bottom plate 14a (refer to Figs. 16 and 17). Then, the board positioning portions 29 of the second supporting portions 28, which face the LED board 18, are in contact with both the outer edges of the LED board 18 on the side of the long side, and the second board positioning portions 30 are in contact with the both outer edges of the LED board 18 on the side of the short side. As a result, the LED board 18 and the board reflection sheet 23 are correctly positioned with respect to the chassis 14 in the X axis direction and the Y axis direction in a two-dimensional way (Figs. 8 and 17).

At this time, the LED board 18 is supported by the board arrangement area BA of the bottom plate 14a of the chassis 14, that is, the first supporting portion 27, from the back side, and the protruding front end portions 28a of the second supporting portions 28 are in contact with the both board nonoverlapping parts NBL projected outward from the both outer edges of the LED board 18 on the side of the long side in the board reflection sheet 23, thereby supporting the LED board 18 from the back side (Fig. 8). Here, the supporting surface for the board reflection sheet 23 in the protruding front end portion 28a of each second supporting portion 28 is arranged closer to the front side than the first supporting portion 27, and is in flush with the supporting surface of the LED board 18, causing no step in the Z axis direction. Accordingly, in the board reflection sheet 23, no step is generated between the board overlapping part BL and the board nonoverlapping part NBL by the LED board 18 and the second supporting portion 28 in the Z axis direction, resulting in that high flatness is maintained. With this configuration, stress concentration on the boundary between the board overlapping part BL and the board non-overlapping part NBL in the board reflection sheet hardly occurs and therefore, deformation (irregularity) in the board reflection sheet 23 can be effectively suppressed. By engaging the adjacent connector parts 18a with each other, the adjacent LED boards 18 can be electrically connected to each other in the X axis direction. The operation of connecting the LED boards 18 aligned in the X axis direction to each other is not necessarily performed within the chassis 14, and may be performed outside of the chassis 14.

When arrangement of all of the light source units U is completed, an operation of arranging the chassis reflection sheet 22 in the chassis 14 is performed. At this time, each diffuser lens 19 is inserted into each lens insertion hole 22b while positioning each lens insertion hole 22b of the chassis reflection sheet 22 with respect to each diffuser lens 19 in the light source unit U (Fig. 3). When the chassis reflection sheet 22 is attached, the body portion 22a is placed on the front side of the bottom plate 14a to which each light source unit U is attached over the entire area. At this time, the edge of the lens insertion hole 22b of the chassis reflection sheet 22 is entirely placed on the front side of the board reflection sheet 23. Further, the through holes 22c of the chassis reflection sheet 22 align with the through holes 18b and 23c of the LED board 18 and the board reflection sheet 23 respectively, and the attaching hole 14e of the chassis 14, thereby mutual communication between holes are achieved. After that, the operation of assembling the holding member 20 is performed.

In assembling each holding member 20 above, the holding member 20 is inserted into the chassis 14 from the front side through the opening 14b and is stored in the chassis 14, and the fixed portion 25 is inserted into the through holes 18b, 22c and 23c and the attachment hole 14e. During the process of inserting the fixed portion 25, each elastic engaging piece 25b is pushed by the edges of the through holes 18b, 22c and 23c and the attachment hole 14e and is elastically deformed once so as to be recessed into the grooved part 25c. Then, when each elastic engaging piece 25b passes through the attachment hole 14e and the fixed portion 25 is inserted to reach the back side of the chassis 14, as shown in Figs. 7 and 9, each elastic engaging piece 25b elastically returns and the engaging part 25d is engaged with the edge of the attachment hole 14e from the back side. Thereby, the holding member 20 is prevented from being detached from the chassis 14 and is fixedly attached. In this state, the LED board 18 and the reflection sheets 22 and 23 are sandwiched between the body portion 24 of the holding member 20 and the bottom plate 14a of the chassis 14 and held together.

In assembling the holding member 20 above, the multifunctional holding member 20B of the holding member 20 is configured to use the optical member supporting portion 26 as the operating part. With this configuration, in assembling the multifunctional holding member 20B, the operator can operate the multifunctional holding member 20B while gripping the optical member supporting portion 26. At this time, since the optical member supporting portion 26 and the fixed portion 25 are located at such a position as to overlap and be concentric with each other in a plan view, the operator can easily know the position of the fixed portion 25. Therefore, the fixed portion 25 can be smoothly inserted into the attachment holes 14e.

Since the fixed portion 25 passes through the reflection sheets 22 and 23 and the LED board 18, it is prevented that the reflection sheets 22 and 23 and the LED board 18 unintentionally move in the X axis direction and the Y axis direction, thereby being positioned in these directions. Further, since fixation can be achieved by passing the fixed portion 25 through the attachment hole 14e formed in the chassis 14 and then, mechanically engaging the fixed portion 25 therewith, as compared to the case of adopting the fixing means such as the adhesive, fixation can be easily performed at low costs and, the holding member 20 can be easily detached at maintenance and disposal.

After that, the optical member 15 is attached to the chassis 14 so as to cover the openings 14b. According to the specific attaching order of the optical member 15, the diffuser 15a, and then, the optical sheets 15b are attached. As shown in Figs. 4 and 5, the outer edge of the optical member 15 is received by the receiving plate 14d of the chassis 14 and the central part of the optical member 15 is supported by the optical member supporting portion 26 of the multifunctional holding member 20B. Then, when the frame 16 is attached to the chassis 14, the outer circumference of the optical member 15 is pinched between the frame 16 and the receiving plates 14d. Thereby, manufacturing of the backlight unit 12 is completed. In assembling the manufactured backlight unit 12 and the liquid crystal panel 11, the liquid crystal panel 11 is placed on the frame 16 and then, the bezel 13 is covered on the front side, and they are screwed together. Thereby, the liquid crystal panel 11 is pinched between the frame 16 and the bezel 13 and becomes integral with the backlight unit 12, resulting in that manufacturing of the liquid crystal display device 10 is completed.

In using the liquid crystal display device 10 manufactured as described above, each of the LEDs 17 provided in the backlight unit 12 is lit and an image signal is supplied to the liquid crystal panel 11, thereby displacing a predetermined image on a display screen of the liquid crystal panel 11. As shown in Figs. 7 and 8, the light emitted to light each of the LEDs 17 is first incident on the light incidence surface 19a of the diffuser lens 19. At this time, most of light is incident on an inclined surface of the light incidence-side concave portion 19c of the light incidence surface 19a and thus, into the diffuser lens 19 while being refracted with a wide angle according to the inclined angle. Then, the incident light propagates in the diffuser lens 19 and is emitted from the light emitting surface 19b. However, since the light emitting surface 19b is a substantially flat spherical surface, the light is emitted while being further refracted at a boundary with the external air layer with a wider angle. Moreover, since the substantially bowl-like light-emitting side concave portion 19e is formed in an area where the amount of light from the LED 17 is the largest in the light emitting surface 19b, and its circumferential surface is a substantially flat spherical surface, the light can be emitted while being refracted at the circumferential surface of the light-emitting side concave portion 19e with a wide angle, or can be reflected toward the LED board 18. Light that is returned to the LED board 18 and moves toward the lens insertion hole 22b is reflected toward the diffuser lens 19 by the board reflection sheet 23 arranged in the lens insertion hole 22b and then, is incident onto the diffuser lens 19 and effectively used, resulting in high brightness.

Since the highly directive light emitted from the LED 17 can be diffused with a wide angle by the diffuser lens 19, in-plane distribution of the light reaching the optical member 15 can be made uniform. In other words, since the area between the adjacent LEDs 17 becomes hard to be visually recognized as the dark place by using the diffuser lens 19, the interval between the LEDs 17 can be increased, thereby reducing the number of installed LEDs 17 while suppressing uneven brightness. Further, since the interval between the adjacent LEDs 17 can be increased by reducing the number of the LEDs 17, the holding member 20 can be arranged in the widened area, and the holding member 20 can fix the LED board 18.

Especially in this embodiment, since the board reflection sheet 23 configured to reflect light at the position nearest the LED 18 and the diffuser lens 19 is supported while keeping flatness without causing deformation (irregularity) as described above, unevenness of light that is reflected by the board reflection sheet 23 and then, moves toward the diffuser lens 19 (reflected light) hardly occurs. Describing in detail, since the second supporting portions 28 support the inner part I arranged in the lens insertion hole 22b in the board nonoverlapping parts NBL of the board reflection sheet 23, the light entering into the lens insertion hole 22b (light that cannot be reflected by the chassis reflection sheet 22) can be reflected toward the diffuser lens 19. In addition, since the second supporting portions 28 support the outer part O overlapping the edge of the lens insertion hole 22b in the board nonoverlapping parts NBL of the board reflection sheet 23, the edge of the lens insertion hole 22b can be brought into contact with the overlapping part of the board nonoverlapping parts NBL, and therefore, it is prevented that a gap therebetween is generated in the Z axis direction and light leaks from the gap. Thus, unevenness of light emitted from the diffuser lens 19 and moves toward the diffuser plate 15a (opening 14b) is hard to occur and light use efficiency can be improved.

In using the liquid crystal display device 10 as described above, since each of the LEDs 17 in the backlight unit 12 is lit on or off, internal temperature environment changes and thus, each component of the liquid crystal display device 10 may be thermally expanded or thermally contracted. Among the constituents, each board reflection sheet 23 may be expanded or contracted due to thermal expansion or thermal contraction and in some cases, may cause deformation such as warpage. Here, deformation caused by change in temperature environment tends to occur especially at the place subjected to stress. That is, when stress concentration on a predetermined place of the board reflection sheet 23 occurs, local deformation due to thermal expansion or thermal contraction tends to occur at this place. In this embodiment, since the board reflection sheet 23 is entirely kept flat by being supported from the side of the chassis 14 by the LED board 18 and the second supporting portion 28 that are in flush with each other as described above, it is prevented that stress concentrates on the boundary between each of the board overlapping part BL and the board non-overlapping part NBL. Accordingly, even when temperature environment changes to some degree, deformation in the board reflection sheet 23 is hard to occur.

As described above, the backlight unit 12 in this embodiment includes the LED board 18 having the LED 17 as the light source, the chassis 14 that stores the LED board 18 therein and has the opening 14b through which the light from the LED 17 exits, the chassis reflection sheet 22 arranged along the inner surface of the chassis 14 and reflects light and the board reflection sheet 23 that overlaps the LED board 18 on the side of the opening 14b, is larger than the LED board 18 in a plan view and reflects light, and the chassis 14 has the first supporting portion 27 that supports the LED board 18 and the second supporting portion 28 arranged closer to the opening 14b than the first supporting portion 27 and supports the board reflection sheet 23.

With this configuration, since, in addition to the chassis reflection sheet 22 arranged along the inner surface of the chassis 14, the board reflection sheet 23 overlapping with the LED board 18 on the side of the opening 14b is provided, for example, even when the hole is formed in the chassis reflection sheet 22, a part of the board reflection sheet 23 is arranged in the hole and therefore, the light use efficiency can be improved. The board reflection sheet 23 is larger than the LED board 18 in a plan view, which means that the LED board 18 is smaller than the board reflection sheet 23 in a plan view, thereby enabling reduction in material costs for the LED board 18.

In the board reflection sheet 23, the overlapping part with the LED board 18 on the opening 14b side (board overlapping part BL) is supported by the LED board 18, and the non-overlapping part with the LED board 18 (board non-overlapping part NBL) is supported by the second supporting portion 28 arranged closer to the opening 14b than the first supporting portion 27 supporting the LED board 18. Accordingly, it is possible to mitigate stress concentration on the boundary between the overlapping part with the LED board 18 (board overlapping part BL) and the non-overlapping part with the LED board 18 (board non-overlapping part NBL) in the board reflection sheet 23. Thereby deformation is hard to occur in the board reflection sheet 23.

The lens insertion hole 22b as a hole is formed in the chassis reflection sheet 22, and at least a part of the board reflection sheet 23 in a plan view is arranged in the lens insertion hole 22b. With this configuration, since the board reflection sheet 23 arranged in the lens insertion hole 22b in the chassis reflection sheet 22 can reflect light toward the lens insertion hole 22b, the light use efficiency can be enhanced.

The edge of the lens insertion hole 22b in the chassis reflection sheet 22 overlaps with the board reflection sheet 23 in a plan view. With this configuration, the edge of the lens insertion hole 22b of the chassis reflection sheet 22 and the board reflection sheet 23 are connected to each other in a plan view without any gap. As a result, the light use efficiency can be further improved. Moreover, since the board reflection sheet 23 is supported by the second supporting portion 28 to suppress deformation, it is prevented that a gap is generated between the edge of the lens insertion hole 22b and the board reflection sheet 23 and light leaks from the gap and therefore, high light use efficiency is obtained.

At least a part of the second supporting portion 28 is located so as to overlap with the edge of the lens insertion hole 22b in the chassis reflection sheet 22 in a plan view. With this configuration, since the overlapping part between the edge of the lens insertion hole 22b in the chassis reflection sheet 22 and the board reflection sheet 23 can be supported by the second supporting portion 28, it can be prevented more reliably that a gap is generated between the edge of the lens insertion hole 22b in the chassis reflection sheet 22 and the board reflection sheet 23 and light leaks from the gap. As a result, the light use efficiency can be further improved.

The chassis reflection sheet 22 is formed so that the lens insertion hole 22b is larger than the LED board 18 in a plan view, at least a part of the second supporting portion 28 is arranged in the lens insertion hole 22b in a plan view. With this configuration, although a part which is not overlapping with the LED board 18 and is not supported by the LED board 18 (inner part I) is included in the part of the board reflection sheet 23, which is arranged in the lens insertion hole 22b in a plan view, the part can be supported by the second supporting portion 28 to suppress deformation. Since the part of the board reflection sheet 23, which is arranged in the lens insertion hole 22b in a plan view, functions to reflect light toward the lens insertion hole 22b, by suppressing deformation of the part, unevenness of reflected light is hard to occur and therefore, excellent optical characteristics are obtained.

The board reflection sheet 23 is provided with the LED insertion hole 23a through which the LED 17 is passed at the overlapping position with the LED 17 in a plan view, while the chassis reflection sheet 22 is formed so that the lens insertion hole 22b is larger than the LED insertion hole 23a in a plan view. With this configuration, since the LED 17 passes through the LED insertion hole 23a and the lens insertion hole 22b, it is prevented that light from the LED 17 is blocked by the board reflection sheet 23 or the chassis reflection sheet 22. By arranging the board reflection sheet 23 in the lens insertion hole 22b that is larger than the LED insertion hole 23a in a plan view, the light use efficiency can be improved.

The diffuser lens 19 that diffuses light from the LED 17 is arranged on the LED board 18 on the opening 14b side so as to overlap with the LED 17 in a plan view, and the lens insertion hole 22b that can pass the diffuser lens 19 therethrough is formed in the chassis reflection sheet 22 so as to overlap with the diffuser lens 19 in a plan view. With this configuration, the light emitted from the LED 17 can be diffused by the diffuser lens 19 and then, guided to the opening 14b. Even when the light reflected toward the LED board 18 occurs in the diffuser lens 19, since the light can be reflected toward the diffuser lens 19 again by the board reflection sheet 23 arranged in the lens insertion hole 22b, the light use efficiency can be improved. Thereby, occurrence of unevenness can be suppressed while increasing brightness of light emitted from the opening 14b.

The board reflection sheet 23 is arranged to be larger than the diffuser lens 19 in a plan view. With this configuration, the light reflected by the diffuser lens 19 toward the LED board 18 can be returned toward the diffuser lens 19 by the board reflection sheet 23 and therefore, the light use efficiency can be further improved.

At least a part of the outer edge of the LED board 18 is formed so as to overlap with the diffuser lens 19 in a plan view. By forming the LED board 18 in this manner, material costs for the LED board 18 can be reduced, which is preferable in cost reduction.

The second supporting portion 28 is in flush with the opposite surface of the LED board 18 to the board reflection sheet 23. With this configuration, since no step is generated between the opposite surface of the LED board 18 and the second supporting portion 28, both of which support the board reflection sheet 23, deformation of the board reflection sheet 23 can be suppressed effectively.

The board reflection sheet 23 is projected outward from each of the both opposing outer edges of the LED board 18, at least a pair of second supporting portions 28 is arranged so as to sandwich the LED board 18 therebetween in a plan view. With this configuration, since the part of the board reflection sheet 23, which is projected from both the outer edges of the LED board 18 (board nonoverlapping part NBL) can be supported by the second supporting portion 28, deformation of the board reflection sheet 23 can be effectively suppressed.

The second supporting portion 28 is formed by partially protruding the chassis 14 toward the opening 14b. With this configuration, as compared to the case the first supporting portion 27 is formed by partially protruding the chassis toward the side opposite to the opening 14b, the second supporting portion 28 can be maintained thin as a whole.

The second supporting portion 28 is point-like in a plan view. With this configuration, since the proportion of the area of the second supporting portion 28 in the whole of the chassis 14 can be made minimum, the second supporting portion 28 can be easily formed by partially protruding the chassis 14. Further, the degree of freedom in arrangement of the second supporting portion 28 is improved.

The board reflection sheet 23 is projected outward from the edges of the LED board 18, while the second supporting portions 28 are arranged with respect to the LEDs 17 in the projecting direction of the board reflection sheet 23. With this configuration, since the LEDs 17 and the second supporting portions 28 are arranged in the projecting direction of the board reflection sheet 23 from the outer edges of the LED board 18 (Y axis direction), deformation of the board reflection sheet 23 can be suppressed at positions closer to the LEDs 17. As a result, unevenness of the light from the LED 17 is hard to occur when reflected by the board reflection sheet 23.

The plurality of LEDs 17 is arranged on the LED board 18 in parallel in one direction, while the plurality of second supporting portions 28 is arranged in parallel in the direction of arranging the LEDs 17 in parallel. With this configuration, since the second supporting portions 28 are located close to the plurality of LEDs 17 arranged on the LED board 18 in parallel to suppress deformation of the board reflection sheet 23, unevenness of light reflected by the board reflection sheet 23 is harder to occur.

The chassis 14 includes the board positioning portions 29 and 30 configured to position the LED board 18 in the direction along the plate surface. With this configuration, in arranging the LED board 18 in the chassis 14, the LED board 18 can be positioned along its plate surface by the board positioning portions 29 and 30. Accordingly, the first supporting portion 27 can reliably support the LED board 18 and can correctly position the board reflection sheet 23 placed on the LED board 18 with respect to the second supporting portion 28.

The board positioning portions 29 and 30 are configured to position the LED board 18 in two directions that are along the plate surface and are orthogonal to each other. With this configuration, the LED boards 18 can be correctly positioned in a two-dimensional way.

Further, the board positioning portion 29 has the second supporting portion 28. With this configuration, as compared to the case where the second supporting portion is provided separately from the board positioning portion 29, the configuration of the chassis 14 can be simplified and manufacturing costs can be reduced.

Further, the board positioning portion 29 is configured by partially protruding the chassis 14 toward the opening 14b and includes the second supporting portion 28. With this configuration, as compared to the case where the board positioning portion and the first supporting portion are formed by partially protruding the chassis toward the side opposite to the opening 14b, the board positioning portion can be maintained thin as a whole.

Further, the holding member 20 is provided that holds the LED board 18, the board reflection sheet 23, and the chassis reflection sheet 22 between the holding member 20 and the chassis 14. With this configuration, the LED board 18, the board reflection sheet 23 and the chassis reflection sheet 22 are held together by the holding member 20.

The holding member 20 includes the body portion 24 that sandwiches the LED board 18, the board reflection sheet 23, and the chassis reflection sheet 22 between the body portion 24 and the chassis 14 and the fixed portion 25 that protrudes from the body portion 24 toward the chassis 14 and is fixed to the chassis 14, and the fixed portion 25 is fixed to the chassis 14 passing through the LED board 18, the board reflection sheet 23, and the chassis reflection sheet 22. With this configuration, the LED board 18, the board reflection sheet 23, and the chassis reflection sheet 22 can be positioned in the direction along the plate surface with the fixed portion 25 passing through the LED board 18, the board reflection sheet 23, and the chassis reflection sheet 22.

The fixed portion 25 passes through the LED board 18, the board reflection sheet 23, the chassis reflection sheet 22, and the chassis 14 and is engaged with the chassis 14 from the side opposite to the LED board 18. With this configuration, since the holding member 20 can be fixed by engaging the fixed portion 25 passing through the LED board 18, the board reflection sheet 23, the chassis reflection sheet 22 as well as the chassis 14 with the chassis 14, fixation can be easily achieved at low costs without requiring another fixing means such as adhesive.

Further, the light source is the LED 17. With this configuration, higher brightness and lower power consumption can be achieved.

Although the first embodiment of the present invention has been described, the present invention is not limited to this embodiment and for example, may include the following modification examples. In each of the following modification examples, the same members as those in the above-mentioned embodiment are given the same reference numerals and illustration and description thereof may be omitted.

### <First modification example of first embodiment>

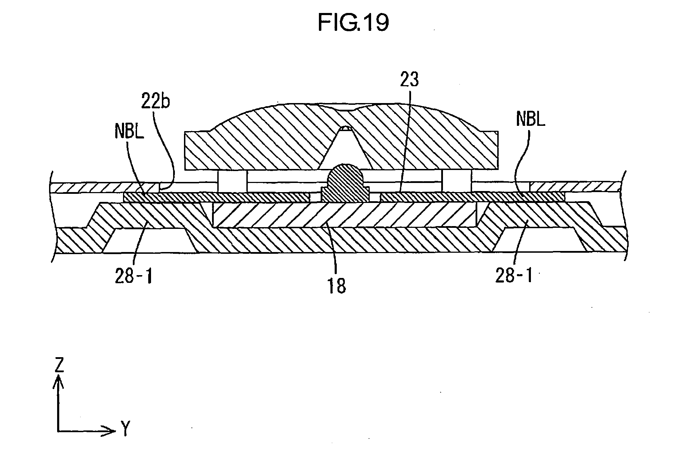

A first modification example of the first embodiment will be described with reference to Fig. 19. Here, the supporting scope for the board reflection sheet 23 is changed by use of second supporting portions 28-1.

Each second supporting portion 28-1 according to the first modification example is extended from the second supporting portion 28 in the first embodiment. Specifically, as shown in Fig. 19, the second supporting portions 28-1 are extended further outward in the projecting direction from the projecting front ends of the board nonoverlapping parts NBL of the board reflection sheet 23, which are projected outward from the both outer edges of the LED board 18 on the side of the long side in the Y axis direction. With this configuration, the projecting front ends of the both board nonoverlapping parts NBL can be reliably supported by the second supporting portions 28-1 from the back side. As a result, both the board nonoverlapping parts NBL can be brought into the overlapping part of the edge of the lens insertion hole 22b more reliably and therefore, it is prevented that a gap therebetween is generated in the Z axis direction and light leaks from the gap.

### <Second modification example of first embodiment>

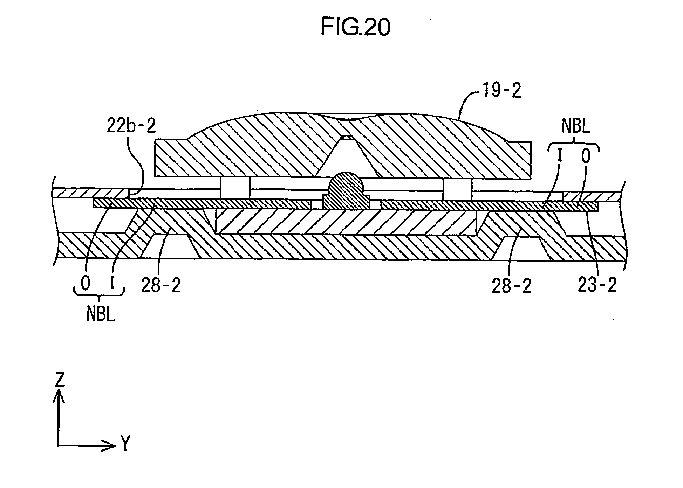

A second modification example of the first embodiment will be described with reference to Fig. 20. Here, supporting positions for the board reflection sheet 23 in a plan view are changed by use of second supporting portions 28-2.

The supporting position for a board reflection sheet 23-2 by each second supporting portion 28-2 according to the second modification example is changed to be inner than the supporting position by the second supporting portion 28 in the first embodiment. Specifically, as shown in Fig. 20, the second supporting portion 28-2 is in contact with the inner part I arranged in a lens insertion hole 22b-2 in a plan view in the board nonoverlapping part NBL of the board reflection sheet 23-2, but is not in contact with the outer part O that is arranged outside of the lens insertion hole 22b-2 and overlaps with an edge of the lens insertion hole 22b-2. That is, the supporting surface extending along the board reflection sheet 23-2 in the second supporting portion 28-2 exists only in the lens insertion hole 22b-2 in a plan view and does not exist outside of the lens insertion hole 22b-2. A diffuser lens 19-2 and the lens insertion hole 22b-2 according to this modification example are larger than those in first embodiment and thus, the short-side dimension (dimension in the Y axis direction) of the board reflection sheet 23-2 is also larger than that in the first embodiment.

### <Third modification example of first embodiment>

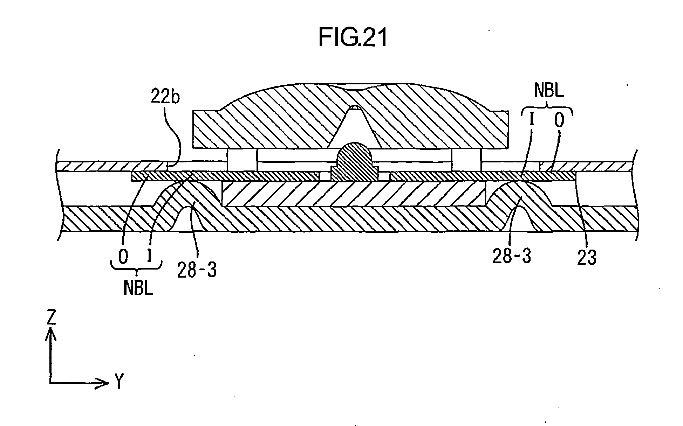

A third modification example of the first embodiment will be described with reference to Fig. 21. Here, arrangement of the second supporting portion 28-3 is modified.

The second supporting portion 28-3 in the third modification example is different from the second supporting portion 28 in the first embodiment in shape and formation scope. Specifically, as shown in Fig. 21, the second supporting portion 28-3 has a substantially inverted U-like cross section. A counter surface (supporting surface) of the second supporting portion 28-3 to the board reflection sheet 23 is shaped like an arc, and is in point-contact with the board reflection sheet 23. As in the second modification example, the second supporting portion 28-3 is in contact with the inner part I arranged in a lens insertion hole 22b in a plan view in the board nonoverlapping part NBL of the board reflection sheet 23, but is not in contact with the outer part O that is arranged outside of the lens insertion hole 22b and overlaps with an edge of the lens insertion hole 22b.

### <Fourth modification example of first embodiment>

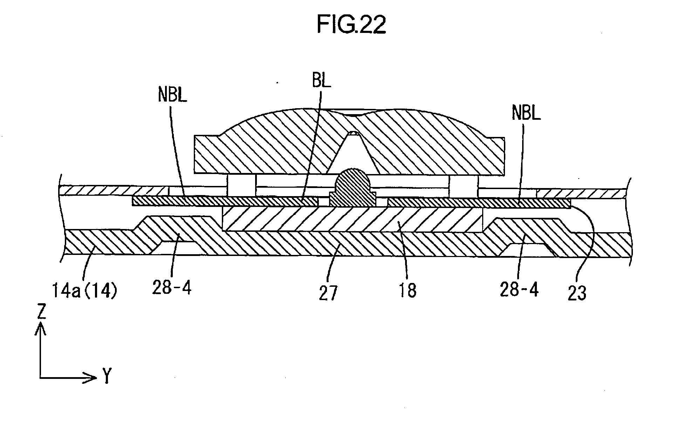

A fourth modification example of the first embodiment will be described with reference to Fig. 22. Here, the changed supporting positions of the second supporting portions 28-4 for the board reflection sheet 23 in a side view are shown.

In the second supporting portions 28-4 in the second modification example, the supporting positions of the second supporting portions 28 for the board reflection sheet 23 in the Z axis direction in the first embodiment are changed to the back side. Specifically, as shown in Fig. 22, the protruding dimension of the second supporting portion 28-4 from the bottom plate 14a of the chassis 14 is set to be smaller than the thickness of the LED board 18. Accordingly, an opposite surface of the second supporting portion 28-4 to the board reflection sheet 23 is not in contact with the board reflection sheet 23 that is straight in the X axis direction and the Y axis direction and a predetermined gap therebetween is held. For this reason, stress may concentrate on the boundary between the board overlapping part BL and the board non-overlapping part NBL of the board reflection sheet 23, thereby possibly causing some deformation. However, since the board non-overlapping part NBL can be supported by the second supporting portion 28-4 arranged closer to the front side than the first supporting portion 27 at a certain stage, further deformation can be restricted. Accordingly, local deformation in the board reflection sheet 23 can be suppressed, thereby maintaining flatness to some degree as a whole.

### <Second embodiment>

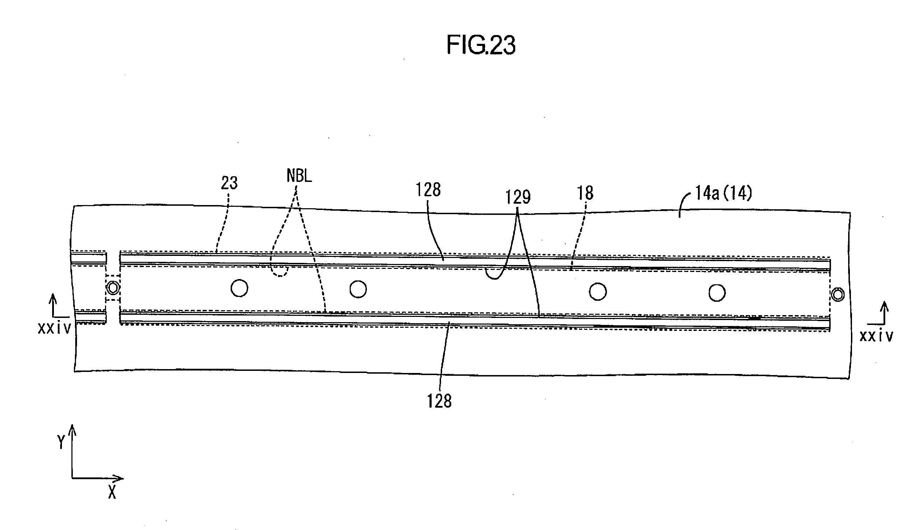

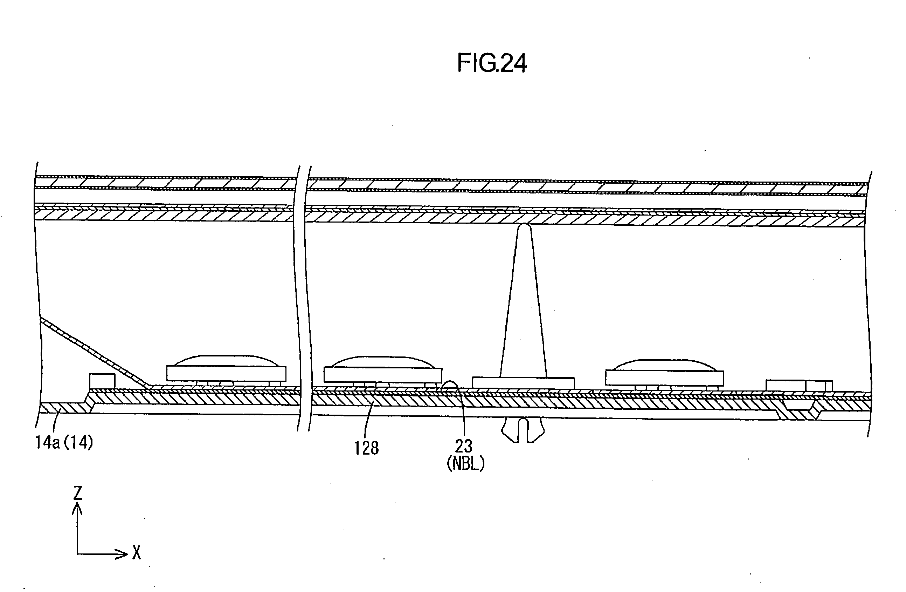

A second embodiment of the present invention will be described below with reference to Fig. 23 or Fig. 24. In the second embodiment, the shape of the second supporting portion 128 is modified. Overlapping description of the same configuration, actions and effects as those in the first embodiment is omitted.

As shown in Figs. 23 and 24, second supporting portions 128 extend in the X axis direction of the bottom plate 14a of the chassis 14, that is, along the outer edges of the LED board 18 on the side of the long side. Describing in detail, the pair of second supporting portions 128 is arranged adjacent to both the outer edges of the LED board 18 on the side of the long side on the bottom plate 14a of the chassis 14 (so as to sandwich the LED board 18 in the Y axis direction), are substantially linear in a plan view and has the almost same length as the long-side dimension of the LED board 18 and the board reflection sheet 23. That is, each second supporting portion 128 overlaps the board nonoverlapping part NBL of the board reflection sheet 23 over the entire length in the long-side direction. Accordingly, the second supporting portion 128 can support the entire board nonoverlapping part NBL of the board reflection sheet 23 in the long-side direction. As a result, deformation of the board reflection sheet 23 is harder to occur. As in the first embodiment, a protruding bottom end of the second supporting portion 128, which is opposite to the LED board 18, constitutes a board positioning portion 129. The board positioning portion 129 extends along the outer edge of the LED board 18 on the side of the long side and is in contact with the outer edge over the full length, thereby positioning the LED board 18 more properly. The shape of the cross section of the board positioning portion 129 is the same as that in the first embodiment shown in Fig. 8 and thus, illustration thereof is omitted.

As described above, according to this embodiment, the second supporting portion 128 is formed so as to extend along the edge of the LED board 18. With this configuration, since stress concentration on the board reflection sheet 23 can be mitigated over the predetermined length along the outer edge of the LED board 18, deformation in the board reflection sheet 23 can be effectively suppressed.

The LED board 18 is rectangular in a plan view, and the second supporting portion 128 extends in the long-side direction of the LED board 18. With this configuration, since stress concentration on the first reflection sheet 23 can be mitigated over the predetermined length along the outer edge of the LED board 18 in the long-side direction, deformation in the board reflection sheet 23 can be effectively suppressed.

Further, the board positioning portion 129 extends along the edge of the LED board 18. With this configuration, by fitting the edge of the LED board to the board positioning portion 129, the LED board 18 can be positioned easily and properly. Further, the LED board 18 is rectangular in a plan view, and the board positioning portion 129 extends in the long-side direction of the LED board 18. With this configuration, the rectangular LED board 18 can be positioned more easily and properly.

### <Third embodiment>

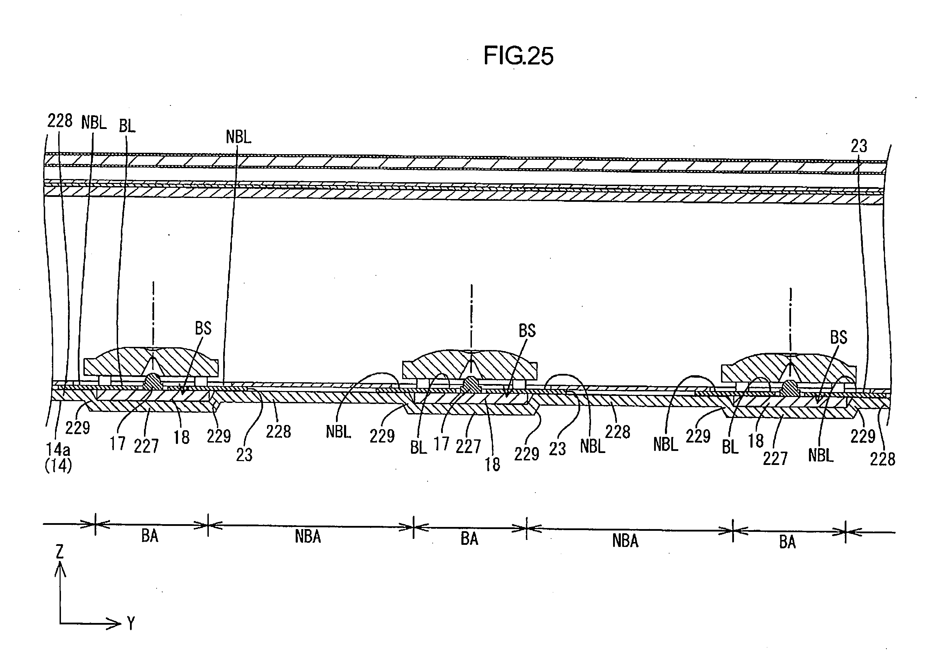

A third embodiment of the present invention will be described below with reference to Figs. 25 to 27. In the third embodiment, first supporting portions 227, the second supporting portions 228 and the board positioning portions 229, which have modified configuration, are shown. Overlapping description of the same configuration, actions and effects as those in the first embodiment is omitted.

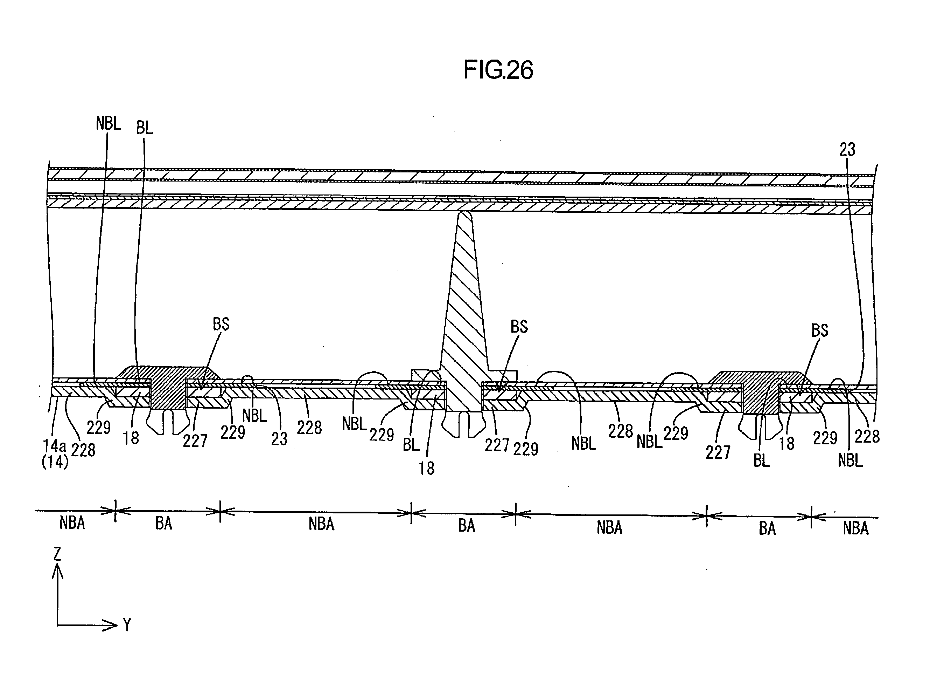

As shown in Fig. 25 and Fig. 26, each first supporting portion 227 is formed by partially protruding the bottom plate 14a of the chassis 14 toward the back side. Describing in detail, the first supporting portion 227 is formed by protruding the board arrangement area BA of the bottom plate 14a, in which the LED board 18 is arranged, from the board nonarrangement area NBA toward the back side, and its protruding dimension is the almost same as the thickness of the LED board 18. Accordingly, the front side surface of the LED board 18, which is supported by the first supporting portion 227 from the back side, is substantially flush with the front side surface of the board nonarrangement area NBA of the bottom plate 14a. The board nonarrangement area NBA of the bottom plate 14a can support the board nonoverlapping part NBL projected from the outer edge of the LED board 18 on the side of the long side in the board reflection sheet 23 placed on the front side surface of the LED board 18, which constitutes the second supporting portion 228. That is, since the supporting surface of the LED board 18, which supports the board overlapping part BL of the board reflection sheet 23, is flush with the supporting surface of the second supporting portion 228, which supports the board nonoverlapping part NBL, the board reflection sheet 23 is wholly supported without any step, thereby keeping flatness. Moreover, since the second supporting portions 228 extend along the outer edges of the LED board 18 on the side of the long side over the full length in the X axis direction as well as along the entire area of the adjacent LED boards 18 in the Y axis direction, the second supporting portions 228 can reliably support the board nonoverlapping part NBL of the board reflection sheet 23.

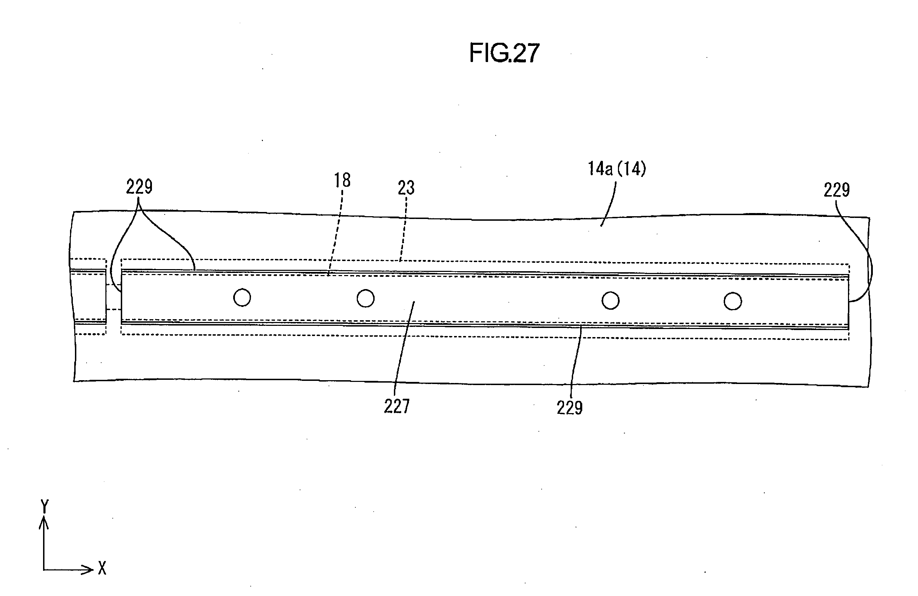

Parts connecting the first supporting portion 227 to the board nonarrangement area NBA of the bottom plate 14a, that is, rising parts from the board nonarrangement area NBA to the back side constitute the board positioning portions 229 that can position the LED board 18 along the plate surface. As shown in Fig. 27, the board positioning portion 229 is shaped like an endless ring surrounding the whole outer circumference of the LED board 18, thereby positioning the LED board 18 in the X axis direction and the Y axis direction in a two-dimensional way. That is, a space surrounded by the first supporting portion 227 and the board positioning portion 229 forms a board storage space BS that can store the LED board 18 therein, has a predetermined width in the Y axis direction and is shaped like a rail extending substantially linearly in the X axis direction.

As described above, according to this embodiment, the first supporting portion 227 is formed by partially protruding the chassis 14 to the side opposite to the opening 14b. With this configuration, since the first supporting portion 227 protrudes toward the side opposite to the opening 14b, the distance between the LED board 18 and the opening 14b can be increased. Accordingly, the light path length where light emitted from the LED 17 and reaches the opening 14b can be ensured long and therefore, unevenness of light emitted from the opening 14b is hard to occur.

The plurality of LED boards 18 is arranged in parallel at predetermined intervals, and the second supporting portion 228 is arranged to cover the entire area between the adjacent LED boards 18. With this configuration, the second supporting portion 228 covering the entire area between the adjacent LED boards 18 can reliably support the board reflection sheet 23 placed on each LED board 18. Therefore, deformation of the board reflection sheet 23 is harder to occur.

In the board positioning portion 229, the board storing space BS storing the LED board 18 therein and the first supporting portion 27 are formed by partially protruding the chassis 14 toward the side opposite to the opening 14b. With this configuration, since the board positioning portion 229 protrudes toward the side opposite to the opening 14b, the distance between the LED board 18 stored in the board storing space BS and the opening 14b can be increased. Accordingly, the light path length where light emitted from the LED 17 and reaches the opening 14b can be ensured long and therefore, unevenness of light emitted from the opening 14b is hard to occur.

The third embodiment of the present invention has been described and however, the present invention is not limited to the embodiment and may include following modification examples. In each of the following modification examples, the same members as those in the above-mentioned embodiment are given the same reference numerals and illustration and description thereof may be omitted.

### <First modification example of third embodiment>

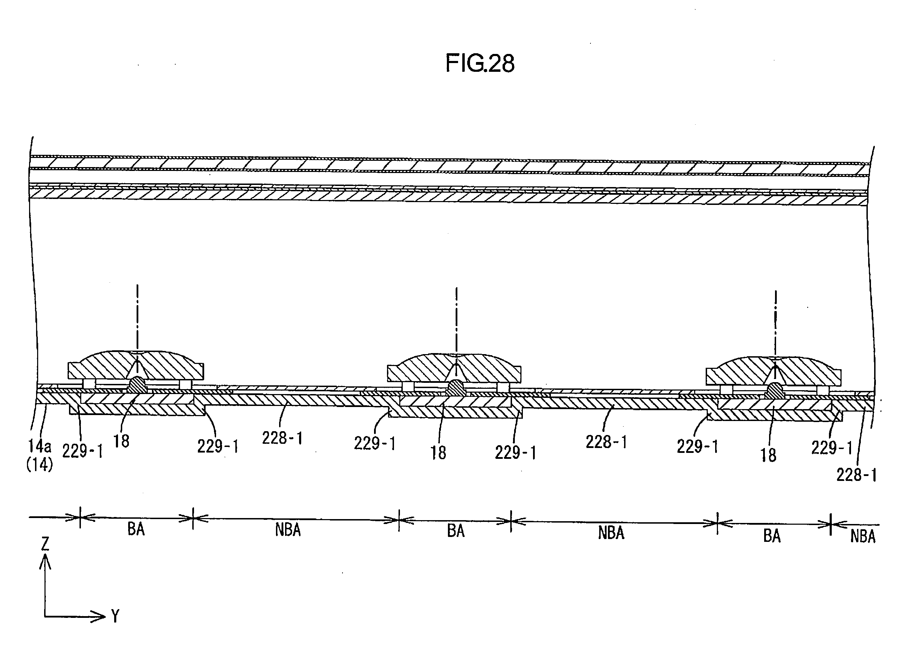

A first modification example of the third embodiment will be described with reference to Fig. 28. Here, board positioning portions 229-1 of modified form are shown.

As shown in Fig. 28, the board positioning portions 229-1 are formed so as to rise perpendicularly from the board nonarrangement area NBA (second supporting portion 228-1) of the bottom plate 14a, and extends in parallel to the outer edges of the LED board 18 on the side of the long side. Accordingly, the board positioning portions 229-1 are in contact with the outer edges of the LED board 18 on the side of the long side substantially without any gap, thereby enabling positioning with high accuracy. Since the gap is hardly generated between the LED board 18 and the board positioning portions 229-1, front side surfaces of the second supporting portion 228-1 and the LED board 18, that is, supporting surfaces for the board reflection sheet 23 constitute one continuous plane without step and break. As a result, the whole surface of the board reflection sheet 23 is supported by the LED boards 18 and the second supporting portion 228-1, thereby ensuring flatness as a whole.

### <Fourth embodiment>

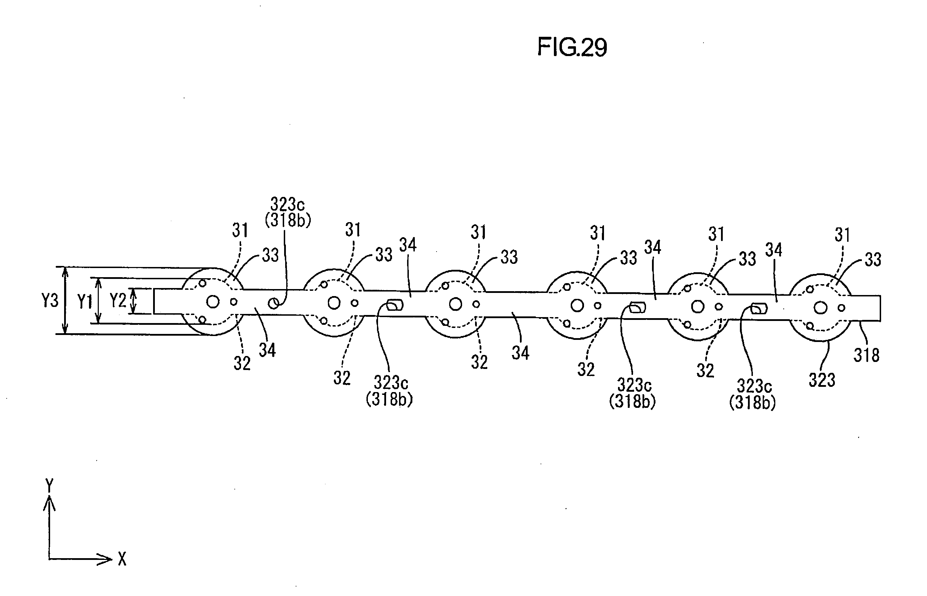

A fourth embodiment of the present invention will be described with reference to Figs. 29 to 31. In the fourth embodiment, an LED board 318 and a board reflection sheet 323, which have modified shape, are shown. Overlapping description of the same configuration, actions and effects as those in the first embodiment is omitted.

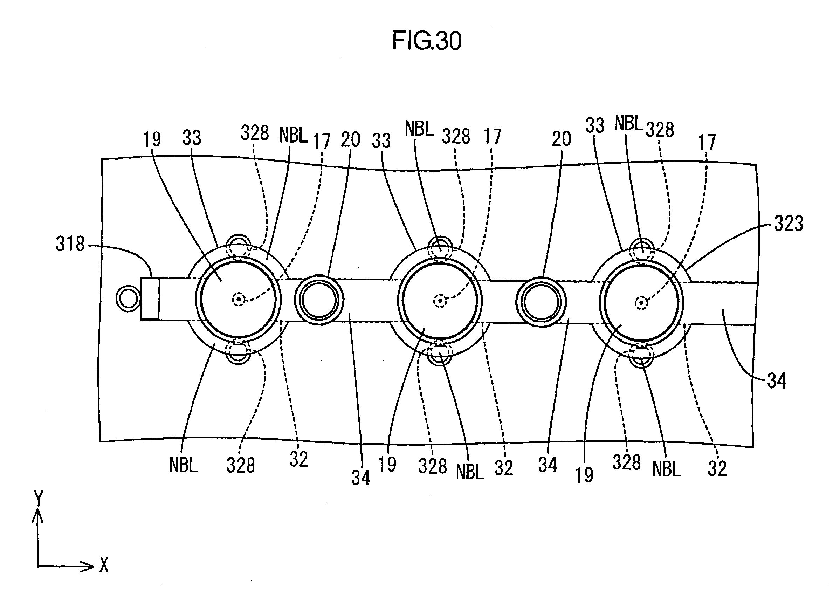

As shown in Figs. 29 and 30, the LED board 318 is a long member extending in the X axis direction as the long-side direction, and its dimension in the Y axis direction, that is, the width in the short-side direction is partially changed.
Describing in detail, the LED board 318 is symmetrical about a symmetry axis along the X axis direction, and is formed of a plurality of LED arrangement portions 31 in which the LED 17 is arranged and a plurality of arrangement portion-connecting portions 32 connecting the adjacent LED arrangement portions 31 to each other. The LED arrangement portions 31 and the arrangement portion-connecting portions 32 are alternately arranged in the X axis direction. Each LED arrangement portion 31, is substantially circular in a plan view, following the planar shape of the diffuser lens 19, while each arrangement portion-connecting portion 32 is substantially straight in the X axis direction. A width Y1 of the LED arrangement portions 31 in the short-side direction of the LED board 318 is smaller than the diameter of the diffuser lens 19, which corresponds to minimum dimension necessary for implementing the diffuser lens 19 (specifically, a dimension that allows attachment of each attachment leg portion 19d described later). On the contrary, a width Y2 of the arrangement portion-connecting portions 32 in the short-side direction of the LED board 318 is smaller than the diameter of the diffuser lens 19 and the width Y1 of the LED arrangement portions 31. The width Y2 of the arrangement portion-connecting portions 32 is set to maintain minimum rigidity (strength) necessary for connecting the LED arrangement portions 31 to each other and enable formation of a through hole 318b through which the fixed portion 25 of the holding member 20 is passed. That is, as compared to the LED board 18 in the first embodiment, the total area can be reduced by forming the arrangement portion-connecting portions 32 to be narrower than the LED arrangement portions 31. Thereby, materials necessary for manufacturing the base member of the LED board 318 can be reduced and therefore, manufacturing costs of the LED board 318 can be reduced. The dimension of the arrangement portion-connecting portions 32 in the X axis direction (length in the long-side direction) is set to be larger than that of the LED arrangement portions 31.

Similar to the LED board 318, the board reflection sheet 323 is a long member extending in the X axis direction as the long-side direction, and its dimension in the Y axis direction, that is, the width in the short-side direction is partially changed. Describing in detail, the board reflection sheet 323 is symmetrical about a symmetry axis along the X axis direction, encircles the LED 17 in a plan view and is formed of LED-surrounding-reflection portions 33 placed on the LED arrangement portions 31 and a plurality of reflection portion-connecting portions 34 that couples the adjacent LED-surrounding-reflection portions 33 to each other and is placed on the arrangement portion-connecting portions 32. The LED-surrounding-reflection portions 33 and the reflection portion-connecting portions 34 are alternately arranged in the X axis direction. Each LED-surrounding-reflection portion 33 is substantially circular in a plan view, following the planar shape of the LED arrangement portions 31 and the diffuser lens 19, while each reflection portion-connecting portion 34, like the arrangement portion-connecting portion 32, is substantially linear in the X axis direction. A width Y3 of the LED-surrounding-reflection portion 33 in the short-side direction of the board reflection sheet 323 is larger than the width Y1 of the LED arrangement portions 31 and the diameter of the diffuser lens 19, thereby sufficiently achieving the optical performance that light reflected by the diffuser lens 19 is returned to the diffuser lens 19 again. On the contrary, the width Y2 of the reflection portion-connecting portions 34 in the short-side direction of the board reflection sheet 323 is the almost same as the width Y2 of the arrangement portion-connecting portions 32 and is smaller than the diameter of the diffuser lens 19 and the width Y3 of the LED-surrounding-reflection portions 33. The width Y2 of the reflection portion-connecting portions 34 is set to maintain minimum rigidity (strength) necessary for connecting the LED-surrounding-reflection portions 33 to each other and enable formation of a through hole 323c through which the fixed portion 25 of the holding member 20 is passed. That is, as compared to the board reflection sheet 23 in the first embodiment, the total area can be reduced by forming the reflection portion-connecting portions 34 to be narrower than the LED-surrounding-reflection portions 33. Thereby, materials necessary for manufacturing the board reflection sheet 323 can be reduced and therefore, manufacturing costs of the board reflection sheet 323 can be reduced. The dimension of the reflection portion-connecting portions 34 in the X axis direction (length in the long-side direction) is set to be larger than that of the LED-surrounding-reflection portions 33.

Second supporting portions 328 are arranged with respect to the LED board 318 and the board reflection sheet 323 of this configuration as follows. Specifically, as shown in Fig. 30, the second supporting portions 328 are adjacent to the LED arrangement portions 31 of the LED board 318 in the Y axis direction, and are located at the almost same positions as the LEDs 17 in the X axis direction. The second supporting portions 328 are located so as to overlap with parts projected from outer edges of the LED arrangement portions 31 in the LED-surrounding-reflection portions 33 of the board reflection sheet 323, that is, the board nonoverlapping parts NBL, in a plan view. Accordingly, the board nonoverlapping parts NBL of the LED-surrounding-reflection portions 33, which are not supported by the LED arrangement portions 31, can be supported by the second supporting portions 328, thereby preferably preventing deformation of the LED-surrounding-reflection portions 33. Since the LED-surrounding-reflection portions 33 in the backlight unit 12 are portions having the very important optical function of returning light from the diffuser lens 19 to the diffuser lens 19 again, optical characteristics of the backlight unit 12 can be achieved by preventing deformation of the LED-surrounding-reflection portions 33.

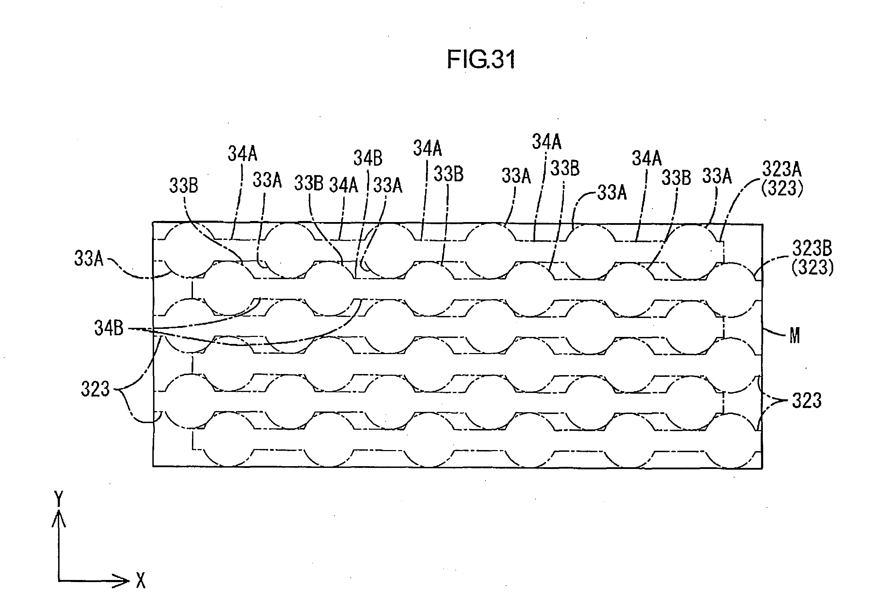

Here, a specific design method in manufacturing the LED board 318 and the board reflection sheet 323 will be described. In a figure for describing the design method, only the board reflection sheets 323 and the LED board 318 is omitted. As shown in Fig. 31, a plurality of board reflection sheets 323 is taken from a large base material M at manufacturing. Assignment (arrangement) of the board reflection sheets 323 to the base material M is as follows. That is, the board reflection sheets 323 is assigned to the base material M so that their long-side direction and the short-side direction are aligned. At this time, the adjacent board reflection sheets 323 in the Y axis direction are offset with each other by predetermined size in the X axis direction. Describing in detail, among the board reflection sheets 323 aligned in the Y axis direction in the base material M, from the top in Fig. 31, odd number of the board reflection sheet 323 are shifted from even number of board reflection sheet 323 in the X axis direction, the odd number of board reflection sheets 323 are located at the same position in the X axis direction and the even number of board reflection sheets 323 are located at the same position in the X axis direction. That is, the board reflection sheets 323 have two different types of arrangement in the X axis direction in the base material M.

The adjacent board reflection sheets 323 in the Y axis direction are arranged in the base material M so that each LED-surrounding-reflection portions 33 is located (engaged) in a area surrounded by the pair of adjacent LED-surrounding-reflection portions 33 in the X axis direction and the reflection portion-connecting portion 34 connecting the adjacent LED-surrounding-reflection portions 33 to each other. For convenience of description, it is assumed that, in Fig. 31, a suffix A is given to the top board reflection sheet 323 and a suffix B is given to the second board reflection sheet 323. In the adjacent board reflection sheets 323B in the Y axis direction, each LED-surrounding-reflection portion 33A of the board reflection sheet 323A is engaged between the pair of adjacent LED-surrounding-reflection portions 33B in the X axis direction, and is in contact with or in close vicinity of the reflection portion-connecting portion 34B connecting the LED-surrounding-reflection portions 33B to each other. That is, the area surrounded by the adjacent LED-surrounding-reflection portions 33 in the X axis direction and the reflection portion connecting-portion 34 connecting the LED -surrounding-reflection portions 33 to each other can become dead space, but by using the dead space, the LED-surrounding-reflection portions 33 (wider portions) of the adjacent board reflection sheet 323 in the Y axis direction can be taken. Accordingly, as compared to the case where the board reflection sheets 323 have only one type of arrangement in the X axis direction in the base material, in this embodiment, the interval between the adjacent board reflection sheets 323 in the Y axis direction (distance between centers of the LED-surrounding-reflection portions 33A and 33B) can be reduced by overlapping the adjacent LED-surrounding-reflection portions 33 each other in the Y axis direction and therefore, the dimension of the base material M in the Y axis direction can be reduced. This means that the same number of board reflection sheets 323 are obtained from a smaller base material M, resulting in that material costs necessary for manufacturing the board reflection sheets 323 can be reduced. This design method for the board reflection sheet 323 can be also adopted for the LED board 318. That is, in taking the plurality of LED boards 318 from a large base material (not shown), the adjacent LED boards 318 in the Y axis direction may be arranged in the base material so that each LED arrangement portion 31 is located (engaged) in a area surrounded by the pair of adjacent LED arrangement portions 31 in the X axis direction and the arrangement portion-connecting portion 32 connecting the LED arrangement portions 31 to each other, and detailed description thereof is omitted.

As described above, in this embodiment, the LED board 318 has the plurality of LEDs 17, while the board reflection sheet 323 is a long member having the plurality of LED-surrounding-reflection portions 33 each surrounding the LED 17 in a plan view and the reflection portion-connecting portions 34 connecting the adjacent LED-surrounding-reflection portions 33 to each other, and in the short-side direction of the board reflection sheet 323, the width of the reflection portion-connecting portions 34 is formed to be smaller than the width of the LED-surrounding-reflection portions 33. With this configuration, the plurality of LED-surrounding-reflection portions 33 is coupled by the reflection portion-connecting portions 34 in the long board reflection sheet 323. Thus, as compared to the case where the LED-surrounding-reflection portions are not coupled and individually divided LED -surrounding- reflection portions form the board reflection sheet, the board reflection sheet 323 is easy to handle and can reduce costs. Although the LED-surrounding-reflection portions 33 require some dimension (width) for reflecting light from the LED 17, the reflection portion-connecting portions 34 do not need to have the same dimension (width) as the LED-surrounding-reflection portions 33 as long as they have mechanical strength necessary for connecting the adjacent LED-surrounding-reflection portions 33. Thus, in this embodiment, since the width of the reflection portion-connecting portions 34 is set to be smaller than the width of the LED-surrounding-reflection portions 33 in the short-side direction of the board reflection sheet 323, as compared to the case where the board reflection sheet has the same width as the LED-surrounding-reflection portions 33 over the full length, the total area of the board reflection sheet 323 can be reduced and therefore, reduction of material costs, that is, lower costs can be realized.

Each second supporting portion 328 is arranged so as to overlap the LED-surrounding-reflection portion 33 in a plan view. With this configuration, since the LED-surrounding-reflection portion 33 is supported by the second supporting portion 328, deformation of the LED-surrounding-reflection portion 33 can be prevented. As a result, when light from the LED 17 is reflected by the LED-surrounding-reflection portions 33, unevenness is harder to occur.

The LED board 318 is a long member having the plurality of LEDs 17 as well as the plurality of LED arrangement portions 31 in which the LEDs 17 are arranged and the arrangement portion-connecting portions 32 each connecting the adjacent LED arrangement portions 31 to each other. The LED board 318 is formed so that the width of the arrangement portion-connecting portions 32 is smaller than the width of the LED arrangement portions 31 in the short-side direction. With this configuration, since the plurality of LED arrangement portions 31 is coupled by the arrangement portion-connecting portions 32 in the long LED board 318, as compared to the case where the LED arrangement portions are not coupled and the individually divided LED arrangement portions form the LED board, the LED board 318 is easy to handle and can reduce costs. Although the LED arrangement portions 31 require some dimension (width) for arranging the LEDs 17, the arrangement portion-connecting portions 32 do not need to have the same dimension (width) as the LED arrangement portions 31 as long as they have mechanical strength necessary for connecting the LED arrangement portions 31 to each other. Thus, in this embodiment, since the width of the arrangement portion-connecting portions 32 is set to be smaller than the width of the LED arrangement portions 31 in the short-side direction of the LED board 318, as compared to the case where the LED board has the same width as the LED arrangement portions 31 over the full length, the total area of the LED board 318 can be reduced and therefore, reduction of material costs, that is, lower costs can be achieved.

The fourth embodiment of the present invention has been described and however, the present invention is not limited to the embodiment and may include following modification examples. In each of the following modification examples, the same members as those in the above-mentioned embodiment are given the same reference numerals and illustration and description thereof may be omitted.

### <First modification example of fourth embodiment>

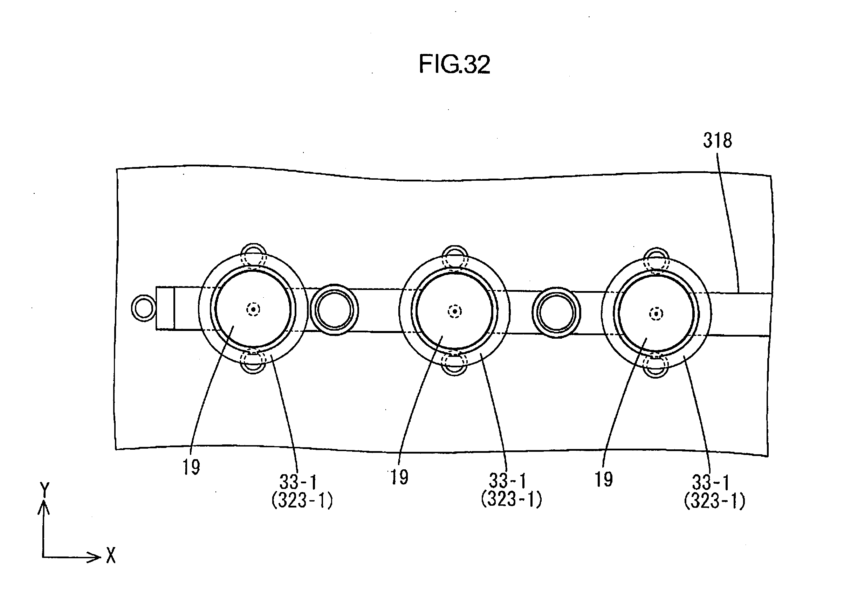

A first modification example of the fourth embodiment will be described with reference to Fig. 32. Here, arrangement of the board supporting portion 323-1 is modified.

As shown in Fig. 32, the board reflection sheet 323-1 is constituted of only an LED-surrounding-reflection portions 33-1 surrounding the LED. That is, the board reflection sheet 323-1 in this embodiment is configured by omitting each reflection portion-connecting portion 34 from the board reflection sheet 323 in the fourth embodiment. The LED-surrounding-reflection portions 33-1 as the board reflection sheet 323-1 are attached individually to the LED arrangement portion 31 of the LED board 318. With this configuration, material costs of the board reflection sheet 323 can be further reduced. Each LED-surrounding-reflection portion 33-1 can be held by the diffuser lens 19 in the attached state. Similar to the board reflection sheet 323-1, the LED board 318 may be formed of only the LED arrangement portion.

### <Fifth embodiment>

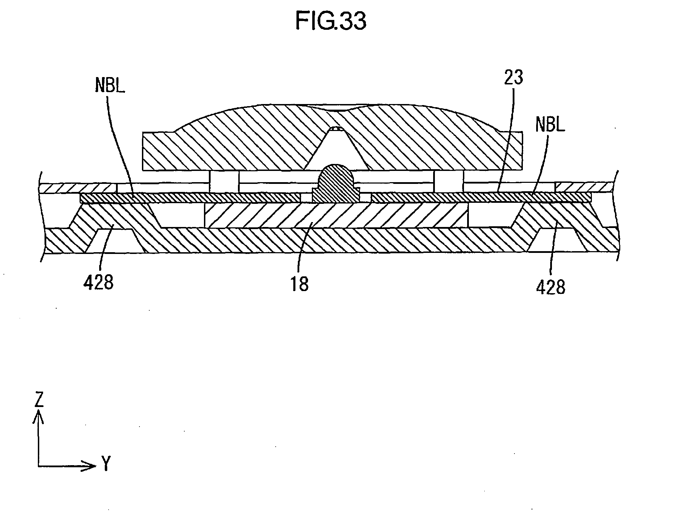

A fifth embodiment of the present invention will be described below with reference to Fig. 33. In the fourth embodiment, the second supporting portions 428 are arranged at different positions from those in the first embodiment, and the board positioning portion is omitted. Overlapping description of the same configuration, actions and effects as those in the first embodiment is omitted.

As shown in Fig. 33, each second supporting portion 428 is separated from the LED board 18 in the Y axis direction, and does not have the function of positioning the LED board 18 in the Y axis direction. With this configuration, arrangement of the second supporting portions 428 can be freely changed according to dimension and shape of the board reflection sheet 23, thereby supporting the board nonoverlapping parts NBL of the board reflection sheet 23 more properly.

### <Other embodiments>

The present invention is not limited to the embodiments described in the above description and figures, and for example, following embodiments fall within the technical scope of the present invention.
(1) The specific shape of the second supporting portion in each of the above-mentioned embodiments can be appropriately changed. For example, the second supporting portion shaped to form a curve or a ring having an end (C-shaped) in a plan view, that is, the second supporting portion that does not extend along the outer edge of the LED board also falls within the scope of the present invention. Further, the cylindrical, prismatic, conical or pyramidal second supporting portion, or the second supporting portion having an angular (triangle), semicircular or elliptical cross section also falls within the scope of the present invention.

(2) Arrangement and the number of the second supporting portions in the bottom plate of the chassis in each of the above-mentioned embodiments can be appropriately changed. Although, for example, the point-like second supporting portions in a plan view are located at the same positions as the LEDs in the X axis direction in the first embodiment, the second supporting portion and the LEDs may be offset in the X axis direction. Configuration in which the number of the second supporting portions is larger or smaller than the number of the LEDs also falls within the scope of the present invention.

(3) Although the linear second supporting portion in a plan view has the same length as the long-side dimension of the LED board in the second embodiment, the linear second supporting portion that is shorter than the long-side dimension of the LED board also falls within the scope of the present invention. In this case, the plurality of linear second supporting portions may be arranged in the X axis direction.

(4) Although the board reflection sheet is projected outward only from the outer edges of the LED board on the side of the long side in the Y axis direction in each of the above-mentioned embodiments, the board reflection sheet projected outward from the outer edges of the LED board on the side of the short side in the X axis direction also falls within the scope of the present invention. In this case, the second supporting portion may be provided adjacent to the LED board in the X axis direction, and support the board reflection sheet projected from the outer edges of the LED board on the side of the short side. At this time, it is preferable that the second supporting portion surrounds the whole circumference of the LED board and more preferably, the whole inner edge of the second supporting portion is used as a board positioning portion.

(5) Although the board reflection sheet is projected outward from both the outer edges of the LED board on the side of the long side in the Y axis direction in each of the above-mentioned embodiments, the board reflection sheet projected from either of both the outer edges of the LED board on the side of the long side also falls within the scope of the present invention. In this case, the second supporting portions need not be provided so as to sandwich the LED board therebetween, and the second supporting portions only need to be provided at the projected part of the board reflection sheet.

(6) Although the second supporting portion supports the inner part arranged in the lens insertion hole in the board nonoverlapping part of the board reflection sheet in each of the above-mentioned embodiments, the second supporting portion that supports only the outer part arranged outside of the lens insertion hole in the board nonoverlapping part and does not support the inner part also falls within the scope of the present invention.

(7) Although the board reflection sheet overlaps the edge of the lens insertion hole in the chassis reflection sheet in each of the above-mentioned embodiments, the inner circumferential surface of the lens insertion hole is in flush with the outer circumferential surface of the board reflection sheet, the board reflection sheet that does not overlap the edge of the lens insertion hole also falls within the scope of the present invention. Further, in addition to the board reflection sheet arranged in the whole area in the lens insertion hole, the board reflection sheet arranged in a part of the lens insertion hole, that is, the front side surface of the LED board, which is partially exposed to the lens insertion hole, also fall within the scope of the present invention.

(8) Although the short-side dimension of the LED board is smaller than the diameter of the diffuser lens in each of the above-mentioned embodiments, the short-side dimension of the LED board, which is equal to or larger than the diameter of the diffuser lens, also falls within the scope of the present invention.

(9) As a matter of course, the configuration described in the first to fourth modification examples can be applied to the second to fifth embodiments. The same applies to the first modification example of the third embodiment.

(10) Positional relationship between the first supporting portion and the second supporting portion in the Z axis direction in each of the embodiments can be changed. For example, configuration in which the front side surface of the second supporting portion is arranged closer to the front side (the opening side) than the front side surface of the board reflection sheet also falls within the scope of the present invention.

(11) Although the second board positioning portion for positioning the LED board in the X axis direction is provided in each of the above-mentioned embodiments (except for the third embodiment), as a matter of course, the second board positioning portion can be omitted.

(12) Although the board positioning portion formed by partially protruding the chassis toward the back side surround the whole of the outer edge of the LED board in the third embodiment, for example, the board positioning portion that is in contact with only the outer edge of the LED board on the side of the long side and does not position the LED board in the X axis direction also falls within the scope of the present invention.

(13) Although the LED board and the board reflection sheet are symmetrical about the symmetry axis along the X axis direction in the fourth embodiment, configuration in which at least one of the LED board and the board reflection sheet is asymmetric also falls within the scope of the present invention. Further, specific shape and dimension of each part of the LED board and the board reflection sheet may be appropriately changed.

(14) Although the board positioning portion, the first supporting portion and the second supporting portion are provided integrally with the chassis in each of the above-mentioned embodiments, at least one of the board positioning portion, the first supporting portion and the second supporting portion, which is formed separately from the chassis and then, is assembled to the chassis, also falls within the scope of the present invention.

15) Although the chassis reflection sheet is provided with the lens insertion hole as a "hole" in each of the above-mentioned embodiments, in the case where a hole other than the lens insertion hole is formed in the chassis reflection sheet as the "hole", configuration in which the board reflection sheet is arranged in the hole also falls within the scope of the present invention.
(

(16) Although the fixed portion of the holding member passes through the LED board and each of the reflection sheets in each of the above-mentioned embodiments, the configuration in which the holding member is arranged in the board non-arrangement area in the chassis and the fixed portion does not pass through the LED board and the board reflection sheet, but passes through the chassis reflection sheet also falls within the scope of the present invention.

(17) The attachment positions and the number of holding members with respect to each LED board in each of the above-mentioned embodiments can be appropriately changed. Similarly, the attachment positions and the number of holding members with respect to the chassis can be appropriately changed.

(18) Although the plug-in type fixed portion is adopted as the attachment structure of the holding member to the chassis in each of the above-mentioned embodiments, a slide type may be adopted as the attachment structure. In such slide-type attachment structure, by adopting a hook-type fixed portion, pushing the body portion toward the bottom plate of the chassis and then, sliding the body portion along the bottom plate, the hooked part of the fixed portion is engaged with the edge of the attachment hole.

(19) Although the fixed portion of the holding member is engaged with the chassis through the through hole in each of the above-mentioned embodiments, the specific method of fixing the fixed portion to the chassis can be appropriately changed. For example, the configuration in which the attachment hole and the elastic engaged portion are omitted and a bottom part passing through the through hole of the LED board is fixedly attached to the inner wall surface of the chassis with the adhesive or the like falls within the scope of the present invention. In this case, means such as deposition and welding other than the adhesive can be adopted.

(20) Although the monofunctional holding member and the multifunctional holding member are simultaneously used in each of the above-mentioned embodiments, the configuration using only the monofunctional holding member or only the multifunctional holding member also falls within the scope of the present invention. The ratio of the monofunctional holding member to the multifunctional holding member, which is simultaneously used, can be appropriately changed.

(21) Although the chassis is made of metal in each of the above-mentioned embodiments, the chassis made of other materials such as synthetic resin also falls within the scope of the present invention.

(22) Although the color of the surface of the supporting member is white in each of the above-mentioned embodiments, the color of the surface of the supporting member may be creamy white or silver. Color of the surface can be set by applying paint of a desired color on the surface of the supporting member.

(23) Although the five-mounted type, the six-mounted type and the eight-mounted type of LED boards are combined as appropriate in each of the above-mentioned embodiments, an LED board that mounts the number of LEDs other than five, six and eight LEDs falls within the scope of the present invention.

(24) Although the LED that includes the LED chip that emits only blue light and emits white light by means of the phosphor is used in each of the above-mentioned embodiments, an LED that includes the LED chip that emits only ultraviolet light and emits white light by means of the phosphor falls within the scope of the present invention.

(25) Although the LED that includes the LED chip that emits only blue light and emits white light by means of the phosphor is used in each of the above-mentioned embodiments, an LED that has three types of LED chips that emit R, G, B, respectively, falls within the scope of the present invention. Moreover, an LED that has three types of LED chips that emit C (cyan), M (magenta), Y (yellow), respectively, also falls within the scope of the present invention.

(26) Although the LED that emits white light in each of the above-mentioned embodiments, an LED that emits red light, an LED that emits blue light and an LED that emits green light may be combined as appropriate.

(27) Although the LED is used as the light source in each of the above-mentioned embodiments, a point light source other than the LED also falls within the scope of the present invention.

(28) Although the diffuser lens that diffuses light from the LED is used in each of the embodiments, an optical lens other than the diffuser lens (for example, a collective lens) falls within the scope of the present invention.

(29) Also in embodiments other than each of the above-mentioned embodiments, screen size and aspect ratio of the liquid crystal display device can be changed as appropriate.

(30) Although the liquid crystal panel and the chassis are arranged in the longitudinally mounted state so that the short-side direction matches the vertical direction in each of the above-mentioned embodiments, the configuration in which the liquid crystal panel and the chassis are arranged in the longitudinally mounted state so that the long-side direction matches the vertical direction also falls within the scope of the present invention
.

(31) Although the TFT is used as the switching component of the liquid crystal display device in each of the above-mentioned embodiments, the present invention can also be applied to a liquid crystal display device using a switching component (for example, a thin film diode (TFD)) other than TFT and the monochrome liquid crystal display device other than the color liquid crystal display device.

32) Although the liquid crystal display device using the liquid crystal panel as the display panel is illustrated in each of the above-mentioned embodiments, the present invention can be applied to a display device using the other type of display panel.
(

(33) Although the television receiver having a tuner is illustrated in each of the above-mentioned embodiments, the present invention can be applied to a display device having no tuner.

### EXPLANATION OF SYMBOLS

10: liquid crystal display unit (display unit), 11: liquid crystal panel (display panel), 12: backlight unit (lighting device), 14: chassis, 14b: opening, 15: optical member, 17: LED (light source), 18, 318: LED board (light source board), 19: diffuser lens, 20: holding member, 22, 522: chassis reflection sheet (chassis reflection member), 22b: lens insertion hole (hole), 23, 323: board reflection sheet (board reflection member), 23a: LED insertion hole (light source insertion hole), 24: body portion, 25: fixed portion, 27, 227: first supporting portion, 28, 128, 228, 328, 428: second supporting portion, 29, 129, 229: board positioning portion, 30: second board positioning portion (board positioning portion), 31: LED arrangement portion (light source arrangement portion), 32: arrangement portion-connecting portion, 33: LED-surrounding-reflection portion (light source-surrounding-reflection portion), 34: reflection portion-connecting portion, BS: board storage space, TV: television receiver

## Claims

1. A lighting device comprising:
a light source;
a light source board having the light source thereon;
a chassis configured to store the light source board therein and have an opening through which the light from the light source exits;
a chassis reflection member arranged along an inner surface of the chassis and configured to reflect the light;
a board reflection member provided to overlap with the light source board on a side of the opening in a plan view, the board reflection member configured to be greater in size than the light source board and reflect light, wherein
the chassis has a first supporting portion configured to support the light source board and a second supporting portion arranged relatively closer to the opening than the first supporting portion and support the board reflection member.

2. The lighting device according to claim 1, wherein a hole is formed in the chassis reflection member, and at least a part of the board reflection member is arranged in the hole in a plan view.

3. The lighting device according to claim 2, wherein an edge of the hole of the chassis reflection member overlaps with the board reflection member in a plan view.

4. The lighting device according to claim 3, wherein at least a part of the second supporting portion is arranged so as to overlap with the edge of the hole of the chassis reflection member in a plan view.

5. The lighting device according to any one of claims 2 to 4, wherein the chassis reflection member is formed such that the hole is greater in size than the light source board in a plan view, and at least a part of the second supporting portion is provided in the hole in a plan view.

6. The lighting device according to any one of claims 2 to 5, wherein the board reflection member is provided with a light source insertion hole so as to overlap with the light source in a plan view, and the light source fits in the light source insertion hole, and the hole of the chassis reflection member is greater in size than the light source insertion hole in a plan view.

7. The lighting device according to claim 6, further comprising a diffuser lens provided on a side of the opening with respect to the light source board to overlap with the light source in a plan view and configured to diffuse light from the light source, wherein
the chassis reflection member includes the hole so as to overlap with the diffuser lens in a plan view, and the hole is formed such that the diffuser lens passes therethrough.

8. The lighting device according to claim 7, wherein the board reflection member is greater in size than the diffuser lens in a plan view.

9. The lighting device according to one of claims 7 and 8, wherein at least a part of an outer edge of the light source board overlaps with the diffuser lens in a plan view.

10. The lighting device according to any one of claims 1 to 9, wherein the second supporting portion is provided on a same plane as a surface of the light source board facing the board reflection member.

11. The lighting device according to any one of claims 1 to 10, wherein the board reflection member is projected outward from both opposing outer edges of the light source board, and at least a pair of the second supporting portions is arranged so as to sandwich the light source board therebetween in a plan view.

12. The lighting device according to any one of claims 1 to 11, wherein the second supporting portion is formed by partially protruding the chassis toward the opening.

13. The lighting device according to claim 12, wherein the second supporting portion is formed in a point-like shape in a plan view.

14. The lighting device according to claim 13, wherein the board reflection member is projected outward from the outer edge of the light source board, and the second supporting portion and the light source are arranged in a projecting direction of the board reflection member.

15. The lighting device according to claim 14, wherein the light source includes a plurality of light sources and the light sources are arranged in one direction on the light source board, and the second supporting portion includes a plurality of second supporting portions and the second supporting portions are arranged in the one direction that the light sources are arranged.

16. The lighting device according to claim 12, wherein the second supporting portion extends along the outer edge of the light source board.

17. The lighting device according to claim 16, wherein the light source board is rectangular in a plan view, and the second supporting portion extends in a long-side direction of the light source board.

18. The lighting device according to any of claims 1 to 17, wherein the first supporting portion is formed by partially protruding the chassis toward a side opposite to the opening.

19. The lighting device according to claim 18, wherein the light source board includes a plurality of light source boards and the light source boards are arranged in parallel at predetermined intervals, and the second supporting portion is configured to cover an entire area between the light source boards that are arranged in adjacent to each other.

20. The lighting device according to any one of claims 1 to 19, wherein the chassis includes a board positioning portion configured to position the light source board along a plate surface of the light source board.

21. The lighting device according to claim 20, wherein the board positioning portion extends along the outer edge of the light source board.

22. The lighting device according to claim 21, wherein the light source board is rectangular in a plan view, and the board positioning portion extends along a long-side direction of the light source board.

23. The lighting device according to any one of claims 20 to 22, wherein the board positioning portion is configured to position the light source board in two directions that are along a plate surface of the light source board and are orthogonal to each other.

24. The lighting device according to any one of claims 20 to 23, wherein the board positioning portion is included in one of the first supporting portion and the second supporting portion.

25. The lighting device according to claim 24, wherein the board positioning portion is configured by partially protruding the chassis toward the opening and included in the second supporting portion.

26. The lighting device according to claim 24, wherein the board positioning portion is configured by partially protruding the chassis toward a side opposite to the opening so as to form a board storing space configured to store the light source board therein and the board positioning portion is included in the first supporting portion.

27. The lighting device according to any one of claims 1 to 26, wherein:
the light source includes a plurality of light sources and the light sources are arranged on the light source board;
the board reflection member is formed in an elongated shape and includes a plurality of light source-surrounding-reflection portions and a reflection portion-connecting portion, each light source-surrounding-reflection portion surrounding each of the light sources in a plan view and the reflection portion-connecting portion connecting the light source-surrounding-reflection portions that are adjacent to each other; and
the reflection portion-connecting portion has a width relatively smaller than the light source-surrounding-reflection portion in a short-side direction of the board reflection member.

28. The lighting device according to claim 27, wherein the second supporting portion is provided so as to overlap with the light source-surrounding-reflection portion in a plan view.

29. The lighting device according to any one of claims 1 to 28, wherein:
the light source includes a plurality of light sources and the light sources are arranged on the light source board;
the light source board is formed in an elongated shape and includes a plurality of light source arrangement portions in which each of the light sources is arranged and an arrangement portion-connecting portion that connects the light source arrangement portions that are in adjacent to each other; and
the arrangement portion-connecting portion has a width relatively smaller than the light source arrangement portion in the short-side direction of the light source board.

30. The lighting device according to any one of claims 1 to 29, further comprising a holding member configured to hold the light source board, the board reflection member, and the chassis reflection member between the holding member and the chassis.

31. The lighting device according to claim 30, wherein the holding member includes a body portion and a fixed portion, the body portion and the chassis sandwich the light source board, the board reflection member and the chassis reflection member therebetween and the fixed portion is configured to protrude from the body portion toward the chassis and to be fixed to the chassis, and the fixed portion is fixed to the chassis through the light source board, the board reflection member and the chassis reflection member.

32. The lighting device according to claim 31, wherein the fixed portion passes through the light source board, the board reflection member, the chassis reflection member, and the chassis, and is fitted to the chassis from a side opposite to the light source board.

33. The lighting device according to any one of claims 1 to 32, wherein the light source is an LED.

34. A display device comprising:
the lighting device according to any one of claims 1 to 33; and
and a display panel configured to provide display using light from the lighting device.

35. The display device according to claim 34, wherein the display panel is a liquid crystal panel configured by filling a liquid crystal between a pair of boards.

36. A television receiver comprising the display device according to one of claims 34 and 35.
